# EUROPEAN PATENT APPLICATION

(11) **EP 4 550 888 A1**
(43) Date of publication of application: **07.05.2025**
(21) Application number: 23830132.9
(22) Date of filing: 25.06.2023
(51) Int. Cl.: H04W 40/22

(54) **IDENTIFIER CONFIGURATION METHODS AND APPARATUS, TERMINAL AND STORAGE MEDIUM**

(30) Priority: 30.06.2022 CN 202210771401
(71) Applicant: Vivo Mobile Communication Co., Ltd., Dongguan, Guangdong 523863 (CN)
(72) Inventor: ZHENG, Qian, Dongguan, Guangdong 523863 (CN); XIAO, Xiao, Dongguan, Guangdong 523863 (CN)
(74) Representative: Michalski Hüttermann & Partner Patentanwälte mbB
(86) International application number: PCT/CN2023/102106
(87) International publication number: WO 2024/001954

(57) **Abstract**

This application pertains to the field of communication technologies, and discloses an identity configuration method and apparatus, a terminal, and a storage medium. The identity configuration method in embodiments of this application includes: sending, by a first terminal, a first message, where the first message is used to configure a local identity of a second terminal, and the local identity is used to uniquely identify the terminal in a U2U relay link, where the U2U relay link includes a source terminal, a target terminal, and a relay terminal, and the second terminal is the source terminal or the target terminal; and receiving, by the first terminal, a second message, where the second message is a response message to the first message.

## Description

### CROSS-REFERENCE TO RELATED APPLICATIONS

This application claims priority to Chinese Patent Application No. 202210771401.1, filed in China on June 30, 2022, which is incorporated herein by reference in its entirety.

### TECHNICAL FIELD

This application pertains to the field of communication technologies, and specifically relates to an identity configuration method and apparatus, a terminal, and a storage medium.

### BACKGROUND

Some communication systems support terminal (User Equipment, UE) to terminal (UE-to-UE, U2U) relay (Relay) communication. Currently, in a U2U relay link, a layer-2 identity (Layer-2 IDentity, L2 ID) is mainly used to identify a terminal. The L2 ID is a global identity and is specifically 24 bits. Therefore, transmission overheads of the terminal are excessively high due to the large L2 ID of the terminal.

### SUMMARY

Embodiments of this application provide an identity configuration method and apparatus, a terminal, and a storage medium to resolve a problem that transmission overheads of a terminal are excessively high due to a large L2 ID of the terminal.

According to a first aspect, an identity configuration method is provided and includes:
sending, by a first terminal, a first message, where the first message is used to configure a local identity of a second terminal, and the local identity is used to uniquely identify the terminal in a U2U relay link, where the U2U relay link includes a source terminal, a target terminal, and a relay terminal, and the second terminal is the source terminal or the target terminal; and
receiving, by the first terminal, a second message, where the second message is a response message to the first message.

According to a second aspect, an identity configuration method is provided and includes:
receiving, by a fourth terminal, a first message sent by a first terminal, where the first message is used to configure a local identity of a second terminal, and the local identity is used to uniquely identify the terminal in a U2U relay link, where the U2U relay link includes a source terminal, a target terminal, and a relay terminal, and the second terminal is the source terminal or the target terminal; and the fourth terminal and the second terminal are the same terminal, or the fourth terminal is the relay terminal; and
sending, by the fourth terminal, a second message to the first terminal, where the second message is a response message to the first message.

According to a third aspect, an identity configuration apparatus is provided and includes:
a first sending module, configured to send a first message, where the first message is used to configure a local identity of a second terminal, and the local identity is used to uniquely identify the terminal in a U2U relay link, where the U2U relay link includes a source terminal, a target terminal, and a relay terminal, and the second terminal is the source terminal or the target terminal; and
a first receiving module, configured to receive a second message, where the second message is a response message to the first message.

According to a fourth aspect, an identity configuration apparatus is provided and includes:
a first receiving module, configured to receive a first message sent by a first terminal, where the first message is used to configure a local identity of a second terminal, and the local identity is used to uniquely identify the terminal in a U2U relay link, where the U2U relay link includes a source terminal, a target terminal, and a relay terminal, and the second terminal is the source terminal or the target terminal; and
a first sending module, configured to send a second message to the first terminal, where the second message is a response message to the first message.

According to a fifth aspect, a terminal is provided. The terminal is a first terminal and includes a processor and a memory. The memory stores a program or instructions capable of running on the processor. When the program or instructions are executed by the processor, the steps of the identity configuration method on the first terminal side according to the embodiments of this application are implemented.

According to a sixth aspect, a terminal is provided and includes a processor and a communication interface. The communication interface is configured to: send a first message, where the first message is used to configure a local identity of a second terminal, and the local identity is used to uniquely identify the terminal in a U2U relay link, where the U2U relay link includes a source terminal, a target terminal, and a relay terminal, and the second terminal is the source terminal or the target terminal; and receive a second message, where the second message is a response message to the first message.

According to a seventh aspect, a terminal is provided. The terminal is a fourth terminal and includes a processor and a memory. The memory stores a program or instructions capable of running on the processor. When the program or instructions are executed by the processor, the steps of the identity configuration method on the fourth terminal side according to the embodiments of this application are implemented.

According to an eighth aspect, a terminal is provided and includes a processor and a communication interface. The communication interface is configured to: receive a first message sent by a first terminal, where the first message is used to configure a local identity of a second terminal, and the local identity is used to uniquely identify the terminal in a U2U relay link, where the U2U relay link includes a source terminal, a target terminal, and a relay terminal, and the second terminal is the source terminal or the target terminal; and send a second message to the first terminal, where the second message is a response message to the first message.

According to a ninth aspect, a readable storage medium is provided. The readable storage medium stores a program or instructions. When the program or instructions are executed by a processor, the steps of the identity configuration method on the first terminal side according to the embodiments of this application are implemented, or when the program or instructions are executed by a processor, the steps of the identity configuration method on the fourth terminal side according to the embodiments of this application are implemented.

According to a tenth aspect, a chip is provided. The chip includes a processor and a communication interface. The communication interface is coupled to the processor. The processor is configured to run a program or instructions to implement the identity configuration method on the first terminal side according to the embodiments of this application, or the processor is configured to run a program or instructions to implement the identity configuration method on the fourth terminal side according to the embodiments of this application.

According to an eleventh aspect, a computer program or program product is provided. The computer program or program product is stored in a storage medium. The computer program or program product is executed by at least one processor to implement the steps of the identity configuration method on the first terminal side according to the embodiments of this application, or the computer program or program product is executed by at least one processor to implement the steps of the identity configuration method on the fourth terminal side according to the embodiments of this application.

According to a twelfth aspect, a frequency domain resource determining system is provided and includes a first terminal and a fourth terminal. The first terminal may be configured to perform the steps of the identity configuration method on the first terminal side according to the embodiments of this application. The fourth terminal may be configured to perform the steps of the identity configuration method on the fourth terminal side according to the embodiments of this application.

In the embodiments of this application, the first terminal sends the first message, where the first message is used to configure the local identity of the second terminal, and the local identity is used to uniquely identify the terminal in the U2U relay link, where the U2U relay link includes the source terminal, the target terminal, and the relay terminal, and the second terminal is the source terminal or the target terminal; and the first terminal receives the second message, where the second message is the response message to the first message. In this way, the local identity can be configured for the second terminal. The local identity uniquely identifies the terminal in the U2U relay link. Compared with a global L2 ID, the local identity has fewer bits. Therefore, transmission overheads of the terminal can be reduced.

### BRIEF DESCRIPTION OF DRAWINGS

FIG. 1 is a block diagram of a wireless communication system to which an embodiment of this application may be applied;
FIG. 2 is a schematic diagram of a U2U relay link according to an embodiment of this application;
FIG. 3 is a schematic diagram of a U2U relay protocol stack according to an embodiment of this application;
FIG. 4 is a flowchart of an identity configuration method according to an embodiment of this application;
FIG. 5 to FIG. 8 are schematic diagrams of identity configuration according to embodiments of this application;

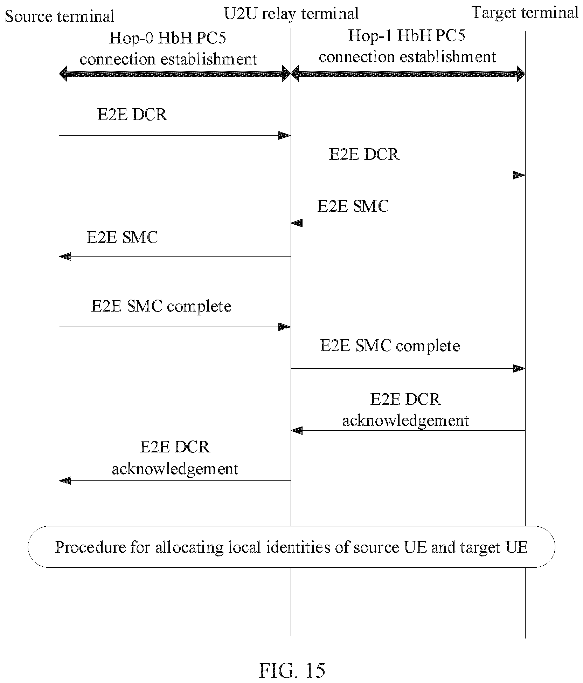

FIG. 9 to FIG. 17 are schematic diagrams of E2E PC5-S link establishment according to embodiments of this application;
FIG. 18 is a flowchart of another identity configuration method according to an embodiment of this application;
FIG. 19 is a structural diagram of an identity configuration apparatus according to an embodiment of this application;
FIG. 20 is a structural diagram of another identity configuration apparatus according to an embodiment of this application;
FIG. 21 is a structural diagram of a communication device according to an embodiment of this application; and
FIG. 22 is a structural diagram of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

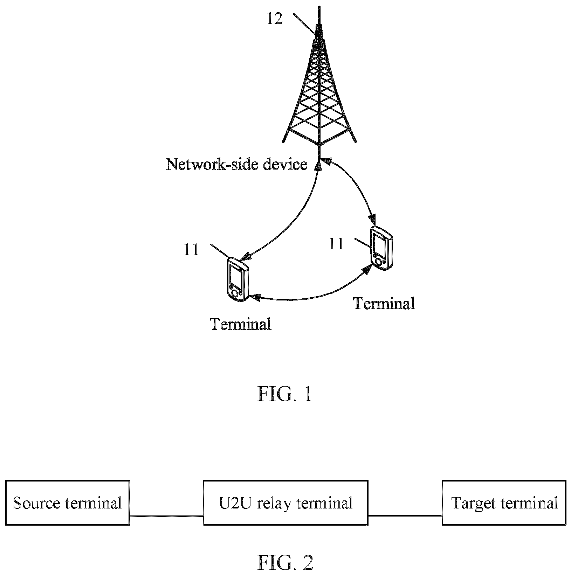

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The network-side device 12 may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

As shown in FIG. 2, in an embodiment of this application, a relay (Relay) mechanism based on a wireless air interface of a sidelink (Sidelink, SL, or translated as a side link, sidelink, or the like) may be used for communication between terminals. FIG. 2 is a schematic illustration of a scenario with only one U2U relay. In this scenario, a source terminal (Source UE) needs to transmit data to a target terminal (Target UE), but due to poor coverage or other reasons, a U2U relay terminal (Relay UE) is found as a relay, where a sidelink (PC5) interface is between the relay UE and the source UE, and a sidelink (PC5) interface is also between the relay UE and the target UE. In some cases, the relay UE is open and can serve any source UE and target UE.

In some embodiments, the source UE may also be referred to as remote terminal (Remote UE), and the target UE may also be referred to as destination terminal (Destination UE).

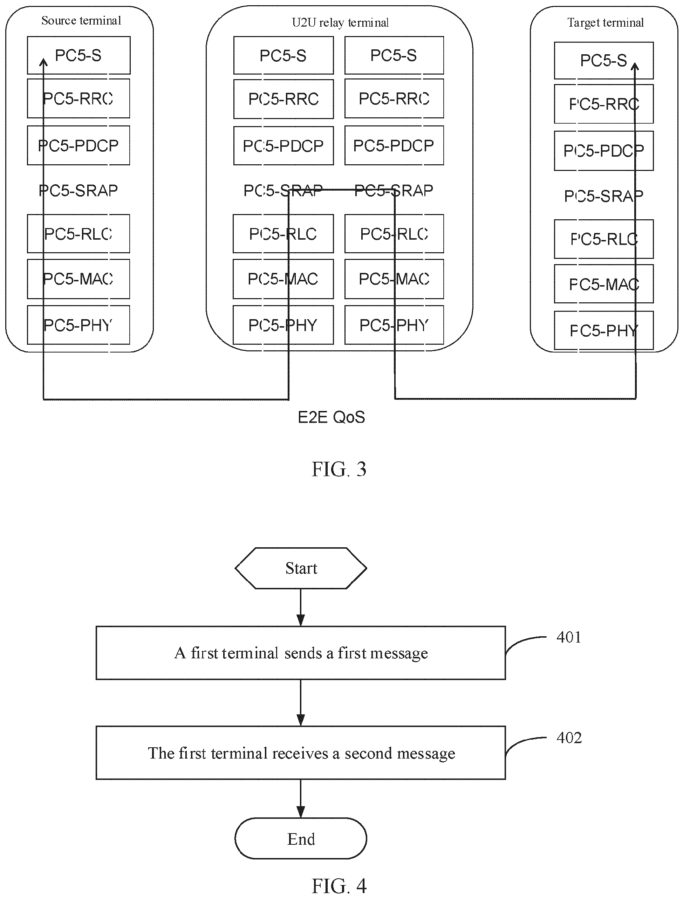

In some embodiments, a U2U relay protocol stack may be shown in FIG. 3. The protocol stack can support two types of quality of service (Quality of Service, QoS). One type is triggered hop-by-hop (hop-by-hop, HbH) QoS, and the other type is end-to-end (End-to-End, E2E) QoS.

An identity configuration method and apparatus, a terminal, and a storage medium provided in embodiments of this application are hereinafter described in detail by using some embodiments and application scenarios thereof with reference to the accompanying drawings.

FIG. 4 is a flowchart of an identity configuration method according to an embodiment of this application. As shown in FIG. 4, the method includes the following steps.

Step 401: A first terminal sends a first message, where the first message is used to configure a local identity (local ID) of a second terminal, and the local identity is used to uniquely identify the terminal in a U2U relay link, where the U2U relay link includes a source terminal, a target terminal, and a relay terminal, and the second terminal is the source terminal or the target terminal.

The first terminal may send the first message to the second terminal, or the first terminal may send the first message to the relay terminal.

The first terminal may be the source terminal or the target terminal, or the first terminal may be the relay terminal.

The local identity of the second terminal may be allocated by the first terminal.

That the local identity is used to uniquely identify the terminal in a U2U relay link may be understood as: the local identity may be used to identify uniqueness of the terminal in the U2U relay link, that is, the terminal may be identified in the U2U relay link by using the local identity, for example, the second terminal may be identified in the U2U relay link by using the local identity of the second terminal.

In addition, in this embodiment of this application, the U2U relay link may be a U2U relay link shown in FIG. 2.

Step 401: The first terminal receives a second message, where the second message is a response message to the first message.

The second message may be a response message returned to the first terminal by a terminal that receives the first message, for example, used to indicate whether the first message is sent successfully or indicate whether the local identity of the second terminal is configured successfully.

In this embodiment of this application, the local identity can be configured for the second terminal through the foregoing steps. The local identity uniquely identifies the terminal in the U2U relay link, that is, the local identity needs to uniquely identify the terminal only in the U2U relay link. Compared with a global L2 ID, the local identity has fewer bits. Therefore, transmission overheads of the terminal can be reduced. For example, in some implementations, the local identity may use 8 or 4 bits.

In an optional implementation, the first message is an HbH PC5 radio resource control (Radio Resource Control, RRC) message, such as a sidelink RRC reconfiguration *(RRCReconfigurationSidelink)* message; and the second message is an HbH PC5 RRC message, such as an *RRCReconfigurationCompleteSidelink* message or a sidelink RRC reconfiguration failure (*RRCReconfigurationFailureSidelink*) message. In this implementation, the local identity can be configured by using the HbH PC5 RRC message. Therefore, the local identity can be configured without the need to define new messages, and complexity of standards can be reduced.

In some implementations, the first message and the second message may alternatively be of message types newly defined in this embodiment of this application. This is not limited.

In an optional implementation, the first message includes at least one of the following: a layer-2 identity (L2 ID) of the second terminal; and the local identity of the second terminal.

In a case that the first message includes only the layer-2 identity of the second terminal, the layer-2 identity is used to indicate that the local identity of the second terminal is a default local identity, or indicate that the local identity of the second terminal is a pre-agreed local identity.

In an optional implementation, before the first terminal sends the first message, the method further includes:
the first terminal receives a third message sent by the relay terminal, where the third message includes at least one of the following:
a layer-2 identity of the second terminal;
the local identity already allocated;
the local identity not allocated; and
the local identity recommended for allocation.

In this implementation, the first terminal is the source terminal or the target terminal.

In this implementation, the layer-2 identity of the second terminal may enable the first terminal to allocate the local identity to the second terminal by referring to the layer-2 identity; and the local identity already allocated, the local identity not allocated, and the local identity recommended for allocation may enable the first terminal to better configure the local identity of the second terminal, for example, to avoid configuring the local identity already allocated, or to configure the local identity recommended for allocation.

In an optional implementation, the third message is an HbH PC5 radio resource control (Radio Resource Control, RRC) message, such as a sidelink terminal assistance information (*UEAssistanceInformationSidelink*) message, a sidelink notification message (*NotificationMessageSidelink*) message, or a sidelink remote terminal information (*RemoteUEInformationSidelink*) message. In some implementations, the third message may alternatively be of a message type newly defined in this embodiment of this application. This is not limited.

In an optional implementation, the first terminal is the source terminal, the second terminal is the target terminal, the first message is a first message sent by the first terminal to the relay terminal, and the second message is a second message sent by the relay terminal and received by the first terminal; or
the first terminal is the target terminal, the second terminal is the source terminal, the first message is a first message sent by the first terminal to the relay terminal, and the second message is a second message sent by the relay terminal and received by the first terminal.

In this implementation, the source terminal can allocate a local identity to the target terminal, and the target terminal can allocate a local identity to the source terminal and send the allocated local identity to the relay terminal, so that the relay terminal can perform relay communication based on the local identities of the source terminal and the target terminal.

Optionally, the second message or a third message includes a local identity of the first terminal, and the third message is a message sent by the relay terminal and received by the first terminal.

In this way, the first terminal can obtain the local identity of the first terminal by using the second message or the third message, to reduce the transmission overheads.

Optionally, the method further includes:
the first terminal receives a fourth message sent by the relay terminal, where the fourth message includes a local identity of the first terminal.

In this way, the local identity of the first terminal can be obtained by using the fourth message.

In an optional implementation, the fourth message is an HbH PC5 radio resource control (Radio Resource Control, RRC) message, such as *a UEAssistanceInformationSidelink* message, a *NotificationMessageSidelink* message, or a *RemoteUEInformationSidelink* message. In some implementations, the fourth message may alternatively be of a message type newly defined in this embodiment of this application. This is not limited.

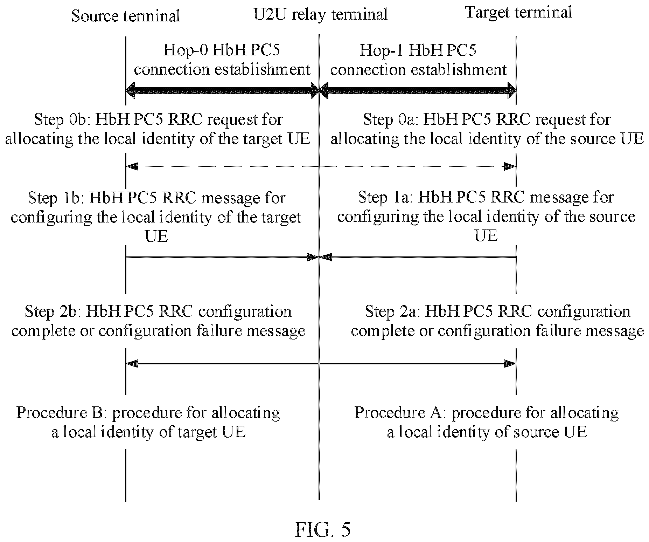

By using examples and referring to FIG. 5, FIG. 6, and FIG. 7, the following describes how the source terminal allocates a local identity to the target terminal and how the target terminal allocates a local identity to the source terminal according to embodiments of this application.

In an embodiment, based on a signaling flow in which peer UE (peer UE) allocates a local ID, in this embodiment, target UE is responsible for allocating a local ID value used by source UE (hereinafter referred to as procedure A for simplicity of description), and source UE is responsible for allocating a local ID value used by target UE (hereinafter referred to as procedure B for simplicity of description). In addition, based on an implementation of HbH PC5 RRC message exchange, initiation of procedure A and procedure B (timing of a first message) is not sequential. As shown in FIG. 5, steps 0b, 1b, and 2b are performed between target UE and relay UE to allocate a used local ID value to source UE, and steps 0a, 1a, and 2a are performed between the source UE and the relay UE to allocate a used local ID value to the target UE.

It should be noted that procedure A and procedure B may be completed simultaneously or sequentially.

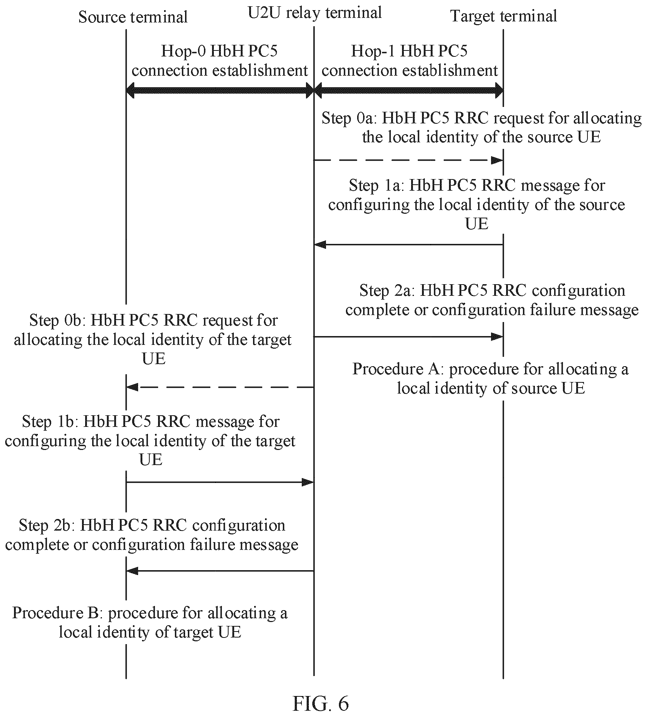

In an embodiment, as shown in FIG. 6, procedure A is completed first, and then procedure B is completed, which may be specifically as follows:

Step 0a (optional): The relay UE sends a first HbH PC5 RRC message to the target UE to request the target UE to allocate a local ID to the source UE, where the HbH PC5 RRC message may carry at least one of the following content:
an L2 ID value of the source UE;
a local ID value already allocated (by other target UE);
a local ID value not allocated (by other target UE); and
a local ID value recommended (to the target UE) for allocation.

Step 1a: The target UE sends a second HbH PC5 RRC message to the relay UE to configure the local ID value of the source UE, where the HbH PC5 RRC message may carry at least one of the following content:
the L2 ID value of the source UE; and
the local ID value of the source UE.

Step 2a: The relay UE sends a third HbH PC5 RRC message to the target UE to indicate that the configuration in step 1a is completed or fails.

Based on a result in step 2a, if it is determined that the configuration is completed, it is considered that the procedure for allocating the local ID of the source UE is completed; or if it is determined that the configuration fails, one of the following operations may be performed:
going to step 0a;
going to step 1a;
triggering U2U relay reselection; and
triggering HbH PC5 RRC connection release.

Step 0b (optional): The relay UE sends a fourth HbH PC5 RRC message to the source UE to request the source UE to allocate a local ID to the target UE, where the HbH PC5 RRC message may carry at least one of the following content:
an L2 ID value of the target UE;
a local ID value already allocated (by other source UE);
a local ID value not allocated (by other source UE); and
a local ID value recommended (to the source UE) for allocation.

Step 1b: The source UE sends a fifth HbH PC5 RRC message to the relay UE to configure the local ID value of the target UE, where the HbH PC5 RRC message may carry at least one of the following content:
the L2 ID value of the target UE; and
the local ID value of the target UE.

Step 2b: The relay UE sends a sixth HbH PC5 RRC message to the source UE to indicate that the configuration in step 1b is completed or fails.

Based on a result in step 2b, if it is determined that the configuration is completed, it is considered that the procedure for allocating the local ID of the target UE is completed; or if it is determined that the configuration fails, one of the following operations may be performed:
going to step 0b;
going to step 1b;
triggering U2U relay reselection; and
triggering HbH PC5 RRC connection release.

After the configuration in step 2a is completed, the relay UE may further send the local ID value of the source UE to the source UE. A specific manner includes one of the following:
using the fourth HbH PC5 RRC message corresponding to step 0b for sending; and
using the sixth HbH PC5 RRC message corresponding to step 2b for sending.

After step 2b (for example, step 3b, not shown in the figure), an HbH PC5 RRC message is used for sending, and a message type thereof is the same as that in step 0b or 1b.

After the configuration in step 2b is completed, the relay UE may further send the local ID value of the target UE to the target UE. A specific manner includes one of the following:
After step 2b (for example, step 3a, not shown in the figure), an HbH PC5 RRC message is used for sending, and a message type thereof is the same as that in step 0a or 1a.

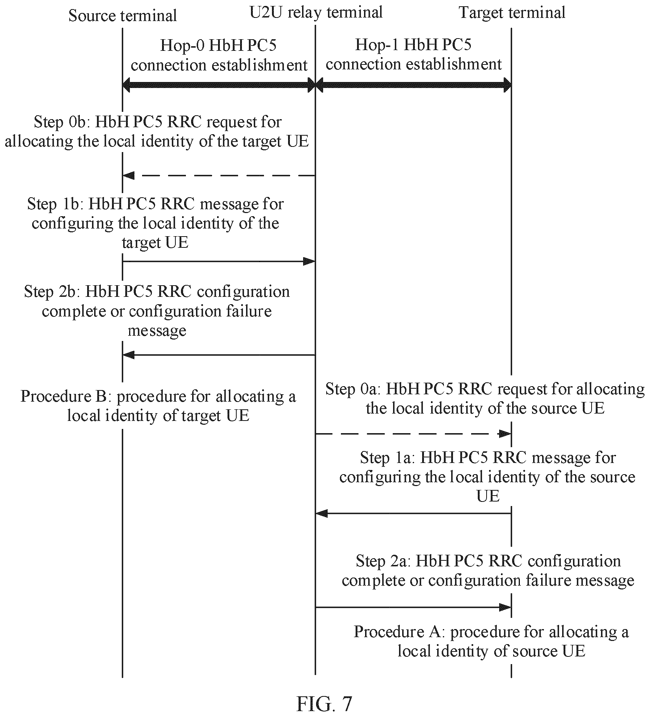

In an embodiment, as shown in FIG. 7, procedure B is completed first, and then procedure A is completed, which may be specifically as follows:

Step 0b (optional): The relay UE sends a fourth HbH PC5 RRC message to the source UE to request the source UE to allocate a local ID to the target UE, where the HbH PC5 RRC message may carry at least one of the following content:
an L2 ID value of the target UE;
a local ID value already allocated (by other source UE);
a local ID value not allocated (by other source UE); and
a local ID value recommended (to the source UE) for allocation.

Step 1b: The source UE sends a fifth HbH PC5 RRC message to the relay UE to configure the local ID value of the target UE, where the HbH PC5 RRC message may carry at least one of the following content:
the L2 ID value of the target UE; and
the local ID value of the target UE.

Step 2b: The relay UE sends a sixth HbH PC5 RRC message to the source UE to indicate that the configuration in step 1b is completed or fails.

Based on a result in step 2b, if it is determined that the configuration is completed, it is considered that the procedure for allocating the local ID of the target UE is completed; or if it is determined that the configuration fails, one of the following operations may be performed:
going to step 0b;
going to step 1b;
triggering U2U relay reselection; and
triggering HbH PC5 RRC connection release.

Step 0a (optional): The relay UE sends a first HbH PC5 RRC message to the target UE to request the target UE to allocate a local ID to the source UE, where the HbH PC5 RRC message may carry at least one of the following content:
an L2 ID value of the source UE;
a local ID value already allocated (by other target UE);
a local ID value not allocated (by other target UE); and
a local ID value recommended (to the target UE) for allocation.

Step 1a: The target UE sends a second HbH PC5 RRC message to the relay UE to configure the local ID value of the source UE, where the HbH PC5 RRC message may carry at least one of the following content:
the L2 ID value of the source UE; and
the local ID value of the source UE.

Step 2a: The relay UE sends a third HbH PC5 RRC message to the target UE to indicate that the configuration in step 1a is completed or fails. Based on a result in step 2a, if it is determined that the configuration is completed, it is considered that the procedure for allocating the local ID of the source UE is completed; or if it is determined that the configuration fails, one of the following operations may be performed:
going to step 0a;
going to step 1a;
   triggering U2U relay reselection; and
triggering HbH PC5 RRC connection release.

After the configuration in step 2a is completed, the relay UE may further send the local ID value of the source UE to the source UE. A specific manner includes one of the following:

After step 2b (for example, step 3b, not shown in the figure), an HbH PC5 RRC message is used for sending, and a message type thereof is the same as that in step 0b or 1b.

After step 2b is completed, the relay UE may further send the local ID value of the target UE to the target UE. A specific manner includes one of the following:
using the first HbH PC5 RRC message corresponding to step 0a for sending; and
using the third HbH PC5 RRC message corresponding to step 2a for sending.

After step 2a (for example, step 3a, not shown in the figure), an HbH PC5 RRC message is used for sending, and a message type thereof is the same as that in step 0a or 1a.

In an optional implementation, the first terminal is the relay terminal, the first message is a message sent by the first terminal to the second terminal, and the second message is a message sent by the second terminal and received by the first terminal.

In this implementation, the relay terminal can configure a local identity for the second terminal, and can specifically configure a local identity for at least one of the source terminal and the target terminal. For example, the method further includes:
the first terminal sends a fifth message to a third terminal, where the fifth message is used to configure a local identity of the third terminal, and in a case that the second terminal is the source terminal, the third terminal is the target terminal, or in a case that the second terminal is the target terminal, the third terminal is the source terminal; and
the first terminal receives a sixth message sent by the third terminal, where the sixth message is a reply message to the fifth message.

In this implementation, the relay terminal can configure the local identities of the second terminal and the third terminal, that is, local matching of both the source terminal and the target terminal is configured by the relay terminal.

In an optional implementation, the fifth message is an HbH PC5 radio resource control (Radio Resource Control, RRC) message, such as an *RRCReconfigurationSidelink* message, and the sixth message is an HbH PC5 RRC message, such as an *RRCReconfigurationCompleteSidelink* message or an *RRCReconfigurationFailureSidelink* message. In this implementation, the local identity can be configured by using the HbH PC5 RRC message. Therefore, the local identity can be configured without the need to define new messages, and complexity of standards can be reduced.

In some implementations, the fifth message and the sixth message may alternatively be of message types newly defined in this embodiment of this application. This is not limited.

Optionally, the first message is used to configure the local identity of the second terminal, or the first message is used to configure the local identities of the second terminal and the third terminal;
and/or
the fifth message is used to configure the local identity of the third terminal, or the fifth message is used to configure the local identities of the third terminal and the second terminal.

In this implementation, a local identity of the source terminal or the target terminal can be configured by using the first message, or local identities of the source terminal and the target terminal can be configured by using the first message; and the local identity of the source terminal or the target terminal can be configured by using the fifth message, or the local identities of the source terminal and the target terminal can be configured by using the fifth message.

For example, the first message may include at least one of the following:
a layer-2 identity of the second terminal;
the local identity of the second terminal; and
the local identity of the third terminal.

The layer-2 identity of the second terminal included in the first message may be used to indicate that the local identity of the second terminal is a default local identity, or indicate that the local identity of the second terminal is a pre-agreed local identity.

For example, the fifth message may include at least one of the following:
a layer-2 identity of the third terminal;
the local identity of the third terminal; and
the local identity of the second terminal.

The layer-2 identity of the third terminal included in the fifth message may be used to indicate that the local identity of the third terminal is a default local identity, or indicate that the local identity of the third terminal is a pre-agreed local identity.

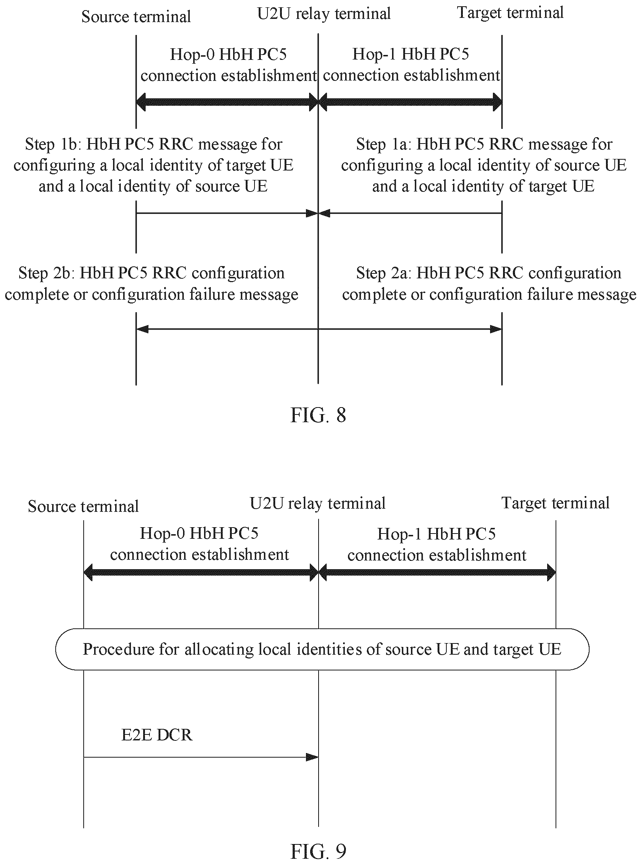

In an embodiment, on a basis that relay UE allocates a local ID, in this embodiment, the relay UE is responsible for allocating a local ID value used by source UE (hereinafter referred to as procedure A for simplicity of description), and is responsible for allocating a local ID value used by target UE (hereinafter referred to as procedure B for simplicity of description). Based on an implementation of HbH PC5 RRC message exchange, specifically as shown in FIG. 8, the following steps are included.

Step 1a: The relay UE sends a first HbH PC5 RRC message to the target UE to configure the local ID value(s) of the source UE and/or the target UE, where the HbH PC5 RRC message may carry at least one of the following content:
an L2 ID value of the source UE;
the local ID value of the source UE; and
the local ID value of the target UE.

Step 2a: The target UE sends a second HbH PC5 RRC message to the relay UE to indicate that the configuration in step 1a is completed or fails.

Based on a result in step 2a, if it is determined that the configuration is completed, it is considered that the procedure for allocating the local ID(s) of the source UE and/or the target UE is completed; or if it is determined that the configuration fails, one of the following operations may be performed:
going to step 1a;
   triggering U2U relay reselection; and
triggering HbH PC5 RRC connection release.

Step 1b: The relay UE sends a third HbH PC5 RRC message to the source UE to configure the local ID value(s) of the source UE and/or the target UE, where the HbH PC5 RRC message may carry at least one of the following content:
an L2 ID value of the target UE;
the local ID value of the source UE; and
the local ID value of the target UE.

Step 2b: The source UE sends a fourth HbH PC5 RRC message to the relay UE to indicate that the configuration in step 1b is completed or fails.

Based on a result in step 2b, if it is determined that the configuration is completed, it is considered that the procedure for allocating the local ID(s) of the source UE and/or the target UE is completed; or if it is determined that the configuration fails, one of the following operations may be performed:
going to step 1b;
   triggering U2U relay reselection; and
triggering HbH PC5 RRC connection release.

In an optional implementation, the second message is used to indicate that the local identity configuration for the second terminal succeeds or fails.

The configuration success may indicate that the local identity of the second terminal can be used to identify the second terminal in the U2U relay link, and the configuration failure may indicate that the local identity of the second terminal cannot be used to identify the second terminal in the U2U relay link.

Optionally, in a case that the second message indicates that the local identity configuration for the second terminal fails, the method further includes one of the following:
performing an identity reallocation operation;
triggering U2U relay reselection; and
triggering HbH PC5 RRC connection release.

The performing an identity reallocation operation may be performing step 201 again, or performing a step of requesting the first terminal to configure a local identity for the second terminal again. As described in the foregoing implementation, the first terminal receives a third message sent by the relay terminal.

In this implementation, in the case of configuration failure, the local identity can be reconfigured; or U2U relay reselection can be triggered to perform relay communication through another relay terminal, to improve reliability of relay communication; or HbH PC5 RRC connection release can be triggered, to release an HbH PC5 RRC connection in time and avoid resource waste.

In an optional implementation, in a case that the first terminal is the source terminal, before the first terminal sends the first message, the first terminal has a first E2E PC5-S message to be sent, where the first E2E PC5-S message is used to establish an E2E PC5-S link with the target terminal; or
before the first terminal sends the first message, the method further includes:
in a case that the first terminal is the relay terminal, the first terminal receives a first notification message sent by the source terminal, where the first notification message is used to trigger allocation of a local identity to at least one of the source terminal and the target terminal.

The first E2E PC5-S message may be a first E2E PC5-S message for establishing an E2E PC5-S link, such as a direct communication request (Direct Communication Request, DCR) or a relay discovery (Relay Discovery) message.

Having the first E2E PC5-S message to be sent triggers a local identity allocation procedure, where the allocation procedure may be the procedure for allocating the local identity of the target terminal by the source terminal, or may be the procedure for allocating the local identity of the source terminal by the target terminal, or may be the procedure for allocating the local identities of the source terminal and the target terminal by the relay terminal.

Having the first E2E PC5-S message to be sent may be that an access stratum (Access Stratum, AS) layer of the first terminal has received an E2E message delivered by an upper-layer entity to the AS layer, but the AS layer has not yet delivered the E2E message to a lower layer (such as a physical layer) for sending over an air interface. Therefore, in a case that the first terminal is the source terminal and that local identity configuration for at least one of the source terminal and the target terminal is completed, the first terminal sends the first E2E PC5-S message to the relay terminal.

The first notification message is used to trigger local identity configuration for at least one of the source terminal and the target terminal, which may be triggering the relay terminal to allocate the local identity of at least one of the source terminal and the target terminal.

In this implementation, the local identity can be allocated before an E2E PC5-S link establishment procedure is performed, so that all E2E PC5-S messages can use the local identity to reduce signaling overheads. For example, all the E2E PC5-S messages can go through a PC5 sidelink relay adaptation protocol (Sidelink Relay Adaptation Protocol, SARP) layer.

Optionally, the method further includes at least one of the following:
in a case that the first terminal is the source terminal and that local identity configuration for at least one of the source terminal and the target terminal is completed, the first terminal sends the first E2E PC5-S message to the relay terminal; and
in a case that the first terminal is the relay terminal and that local identity configuration for at least one of the source terminal and the target terminal is completed, the first terminal receives the first E2E PC5-S message sent by the source terminal.

That the first terminal sends the first E2E PC5-S message to the relay terminal may indicate that the source terminal has allocated a local identity to the target terminal, and/or that the target terminal has allocated a local identity to the source terminal, and therefore the first E2E PC5-S message for establishing the E2E PC5-S link is sent.

That the first terminal receives the first E2E PC5-S message sent by the source terminal may also indicate that the source terminal has allocated a local identity to the target terminal, and/or that the target terminal has allocated a local identity to the source terminal, and therefore the first E2E PC5-S message for establishing the E2E PC5-S link is received.

Optionally, a SRAP header of the first E2E PC5-S message includes a local identity of the target terminal; and a SRAP header of a second E2E PC5-S message sent by the relay terminal to the target terminal includes a local identity of the source terminal; or
a SRAP header of the first E2E PC5-S message includes a local identity of the target terminal and a local identity of the source terminal; and a SRAP header of a second E2E PC5-S message sent by the relay terminal to the target terminal includes the local identity of the source terminal and the local identity of the target terminal.

The second E2E PC5-S message may be an E2E DCR sent by the relay terminal to the target terminal.

In this implementation, because the SRAP headers of the first E2E PC5-S message and the second E2E PC5-S message use local identities, overheads of the E2E PC5-S messages can be reduced.

In some implementations, a media access control (Medium Access Control, MAC) header of the first E2E PC5-S message may include a layer-2 identity of the source terminal and a layer-2 identity of the relay terminal, and a MAC header of the second E2E PC5-S message may include the layer-2 identity of the relay terminal and a layer-2 identity of the target terminal.

In an embodiment, as shown in FIGs. 9, 10, and 11, the local ID allocation procedure is completed before the E2E PC5-S link establishment procedure is performed, and in this embodiment, all E2E PC5-S messages can go through the PC5 SARP layer to further reduce signaling overheads, as shown in FIG. 9, which may specifically include the following:

If the source UE receives a first E2E PC5-S message (such as a DCR) from its upper layer, the source UE performs one of the following:
the procedure for allocating the local ID of the target UE (such as step 1b shown in FIG. 5, FIG. 6, and FIG. 7);
instructing the relay UE to trigger the procedure for allocating the local ID of the source UE (such as step 0a shown in FIG. 5, FIG. 6, and FIG. 7); and
instructing the relay UE to trigger the procedure for allocating the local IDs of the source UE and the target UE (such as step 1a and/or step 1b shown in FIG. 8).

If it is determined that at least one of the following conditions is met, the source UE performs the step of sending the first E2E PC5-S message to the relay UE:
allocation of the local ID of the target UE is completed (such as step 2b or 3b shown in FIG. 5, FIG. 6, and FIG. 7, or step 2b shown in FIG. 8); and
allocation of the local ID of the source UE is completed (such as step 2a or 3a shown in FIG. 5, FIG. 6, and FIG. 7, or step 2a shown in FIG. 8).

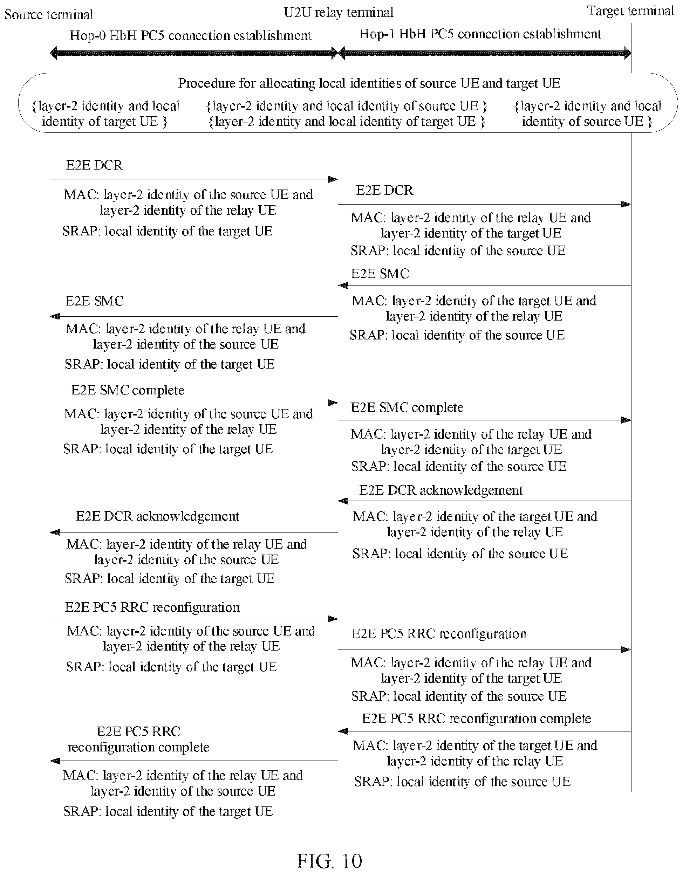

As shown in FIG. 10, a PC5 SARP header format may meet at least one of the following conditions:
the local ID value of the target UE is used between the source UE and the relay UE, as terminal identity (UE ID) information carried in the PC5 SARP header format; and
the local ID value of the source UE is used between the relay UE and the target UE, as UE ID information carried in the PC5 SARP header format.

After receiving a PC5 SRAP protocol data unit (Protocol Data Unit, PDU) from the source UE, the relay UE performs additional processing on the PC5 SRAP header format if the relay UE determines that the header format meets the foregoing conditions, that is, the relay UE translates the local ID and the L2 ID in association during forwarding per hop (per hop), finally replaces the UE ID information with the local ID value of the source UE, and then forwards the PC5 SRAP PDU to the target UE.

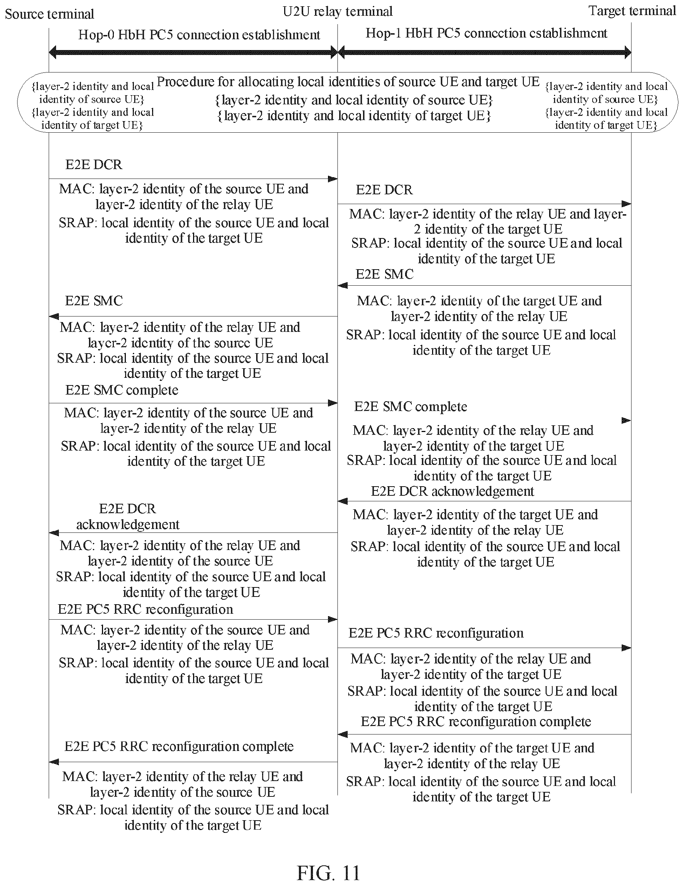

As shown in FIG. 11, a PC5 SARP header format may meet at least one of the following conditions:
the local ID value of the source UE and the local ID value of the target UE are used between the source UE and the relay UE, as UE ID information carried in the PC5 SARP header format; and
the local ID value of the source UE and the local ID value of the target UE are used between the relay UE and the target UE, as UE ID information carried in the PC5 SARP header format.

After receiving a PC5 SRAP PDU from the source UE, the relay UE transparently forwards the PC5 SRAP PDU to the target UE if the relay UE determines that the header format meets the foregoing conditions, without performing additional processing on the PC5 SRAP header format.

In an optional implementation, before the first terminal sends the first message, the method further includes at least one of the following:
in a case that the first terminal is the source terminal, the first terminal sends a third E2E PC5-S message to the relay terminal, where the third E2E PC5-S message is used to establish an E2E PC5-S link with the target terminal; and
in a case that the first terminal is the relay terminal, the first terminal receives a third E2E PC5-S message sent by the source terminal, where the third E2E PC5-S message is used to request the source terminal to establish an E2E PC5-S link with the target terminal.

The first E2E PC5-S message may be a first E2E PC5-S message for establishing an E2E PC5-S link, such as a DCR.

That the first terminal sends a third E2E PC5-S message to the relay terminal may be triggering the relay terminal to request the source terminal to allocate a local identity, or triggering the source terminal to allocate a local identity.

That the first terminal receives a third E2E PC5-S message sent by the source terminal may be receiving the third E2E PC5-S message and triggering a local identity allocation procedure, where the allocation procedure may be a procedure in which the relay terminal allocates local identities of the source terminal and the target terminal.

In this implementation, the local identity can be allocated in the E2E PC5-S link establishment procedure, so that all E2E PC5-S messages except the first E2E PC5-S message can use the local identity to reduce signaling overheads. For example, all the E2E PC5-S messages except the first E2E PC5-S message can go through the PC5 sidelink relay adaptation protocol (Sidelink Relay Adaptation Protocol, SARP) layer.

Optionally, the method further includes:
in a case that the first terminal is the relay terminal and that local identity configuration for at least one of the source terminal and the target terminal is completed, the first terminal sends a fourth E2E PC5-S message to the target terminal.

That the first terminal sends a fourth E2E PC5-S message to the target terminal may indicate that the source terminal has allocated a local identity to the target terminal, and/or that the target terminal has allocated a local identity to the source terminal, and therefore the fourth E2E PC5-S message for establishing an E2E PC5-S link is sent.

Optionally, a SRAP header of the third E2E PC5-S message includes a local identity of the target terminal, and a SRAP header of the fourth E2E PC5-S message includes a local identity of the source terminal; or
a SRAP header of the third E2E PC5-S message includes a local identity of the target terminal and a local identity of the source terminal; and a SRAP header of the fourth E2E PC5-S message includes the local identity of the source terminal and the local identity of the target terminal.

In this implementation, because the SRAP headers of the third E2E PC5-S message and the fourth E2E PC5-S message use local identities, overheads of the E2E PC5-S messages can be reduced.

In some implementations, a MAC header of the third E2E PC5-S message may include a layer-2 identity of the source terminal and a layer-2 identity of the relay terminal, and a MAC header of the fourth E2E PC5-S message may include the layer-2 identity of the relay terminal and a layer-2 identity of the target terminal.

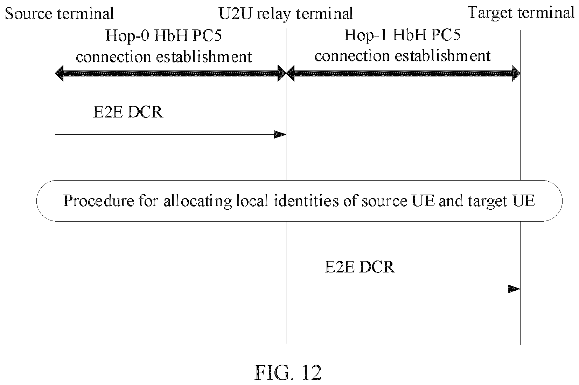

In an embodiment, as shown in 12, 13, and 14, the local ID allocation procedure is completed in the E2E PC5-S link establishment procedure, and in this embodiment, all E2E PC5-S messages except a first E2E DCR go through the PC5 SARP layer to further reduce signaling overheads, as shown in FIG. 12, which may specifically include the following:

If the source UE receives a first E2E PC5-S message (such as a DCR) from its upper layer, the source UE sends the first E2E PC5-S message to the relay UE.

If the first E2E PC5-S message sent by the source UE is received, the relay UE performs one of the following:
the procedure for allocating the local ID of the source UE (such as step 0a shown in FIG. 5, FIG. 6, and FIG. 7);
instructing the source UE to trigger the procedure for allocating the local ID of the target UE (such as step 0b shown in FIG. 5, FIG. 6, and FIG. 7); and
the procedure for allocating the local IDs of the source UE and the target UE (such as step 1a and/or step 1b shown in FIG. 8).

If it is determined that at least one of the following conditions is met, the relay UE performs the step of sending the first E2E PC5-S message to the target UE:
allocation of the local ID of the target UE is completed (such as step 2b or 3b shown in FIG. 5, FIG. 6, and FIG. 7, or step 2b shown in FIG. 8); and
allocation of the local ID of the source UE is completed (such as step 2a or 3a shown in FIG. 5, FIG. 6, and FIG. 7, or step 2a shown in FIG. 8).

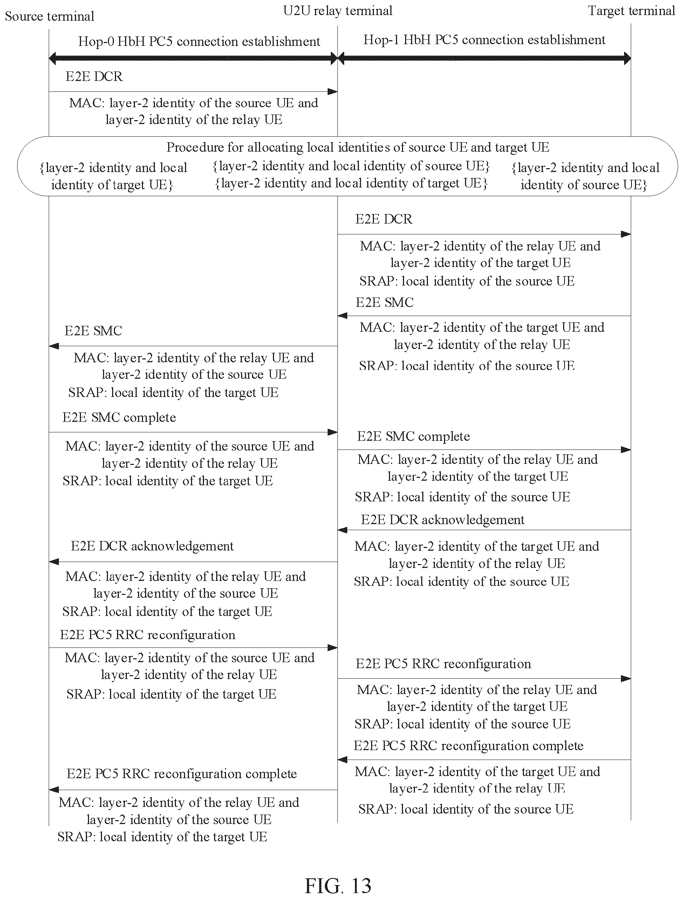

As shown in FIG. 13, a PC5 SARP header format may meet at least one of the following conditions:
the local ID value of the target UE is used between the source UE and the relay UE, as UE ID information carried in the PC5 SARP header format (excluding the first E2E PC5-S message); and
the local ID value of the source UE is used between the relay UE and the target UE, as UE ID information carried in the PC5 SARP header format.

After receiving a PC5 SRAP PDU from the source UE, the relay UE performs additional processing on the PC5 SRAP header format if the relay UE determines that the header format meets the foregoing conditions, that is, the relay UE translates the local ID and the L2 ID in association during forwarding per hop, finally replaces the UE ID information with the local ID value of the source UE, and then forwards the PC5 SRAP PDU to the target UE.

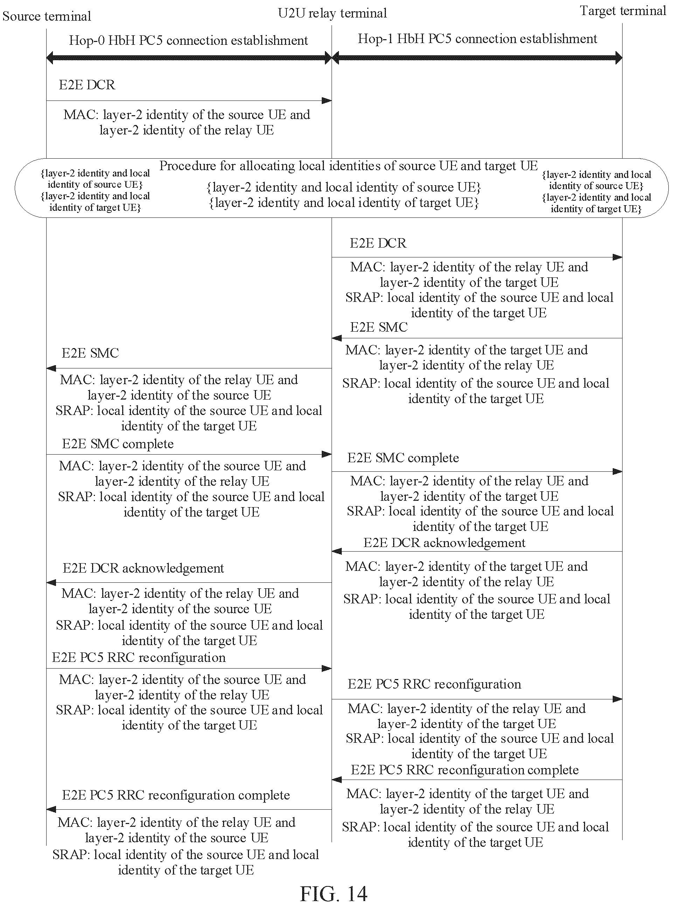

As shown in FIG. 14, a PC5 SARP header format may meet at least one of the following conditions:
the local ID value of the source UE and the local ID value of the target UE are used between the source UE and the relay UE, as UE ID information carried in the PC5 SARP header format; and
the local ID value of the source UE and the local ID value of the target UE are used between the relay UE and the target UE, as UE ID information carried in the PC5 SARP header format.

After receiving a PC5 SRAP PDU from the source UE, the relay UE transparently forwards the PC5 SRAP PDU to the target UE if the relay UE determines that the header format meets the foregoing conditions, without performing additional processing on the PC5 SRAP header format.

In an optional implementation, before the first terminal sends the first message, the method further includes at least one of the following:
in a case that the first terminal is the source terminal, the first terminal receives a fifth E2E PC5-S message sent by the target terminal, where the fifth E2E PC5-S message is used to indicate that E2E PC5-S link establishment between the source terminal and the target terminal is completed; and
in a case that the first terminal is the relay terminal, the first terminal receives a second notification message sent by the source terminal, where the second notification message is used to trigger allocation of a local identity to at least one of the source terminal and the target terminal.

The fifth E2E PC5-S message may be a last E2E PC5-S message in the E2E PC5-S link establishment process, such as direct communication accept (Direct Communication Accept, DCA). Completion of E2E PC5-S link establishment may also be understood as success of E2E PC5-S link establishment.

That the first terminal receives a fifth E2E PC5-S message sent by the target terminal may indicate that establishment of the E2E PC5-S link is completed, thereby triggering the local identity allocation procedure, where the allocation procedure may be the procedure for allocating the local identity of the target terminal by the source terminal, or may be the procedure for allocating the local identity of the source terminal by the target terminal, or may be the procedure for allocating the local identities of the source terminal and the target terminal by the relay terminal.

The second notification message may indicate that establishment of the E2E PC5-S link is completed, thereby triggering the relay terminal to allocate the local identity of at least one of the source terminal and the target terminal.

In this implementation, in a case that the establishment of the E2E PC5-S link is completed, the local identity can be allocated after end-to-end security is activated, so that the source terminal, the target terminal, and the relay terminal can use the local identity in subsequent communication in the E2E PC5-S link to reduce signaling overheads.

Optionally, the method further includes at least one of the following:
in a case that the first terminal is the source terminal and that local identity configuration for at least one of the source terminal and the target terminal is completed, the first terminal sends a first E2E PC5-RRC message to the relay terminal; and
in a case that the first terminal is the relay terminal and that local identity configuration for at least one of the source terminal and the target terminal is completed, the first terminal receives the first E2E PC5-RRC message sent by the source terminal.

The first E2E PC5-RRC message may be any E2E PC5-RRC message after the E2E PC5-S link is successfully established, such as a PC5 RRC reconfiguration (RRC Reconfiguration) message.

That the first terminal sends a sixth E2E PC5-S message to the relay terminal may indicate that the source terminal has allocated a local identity to the target terminal, and/or that the target terminal has allocated a local identity to the source terminal, and therefore the first E2E PC5-RRC message is sent.

That the first terminal receives the first PC5-RRC message sent by the source terminal may also indicate that the relay terminal has allocated a local identity to the target terminal, and/or that the relay terminal has allocated a local identity to the source terminal, and therefore the first E2E PC5-RRC message is received.

Optionally, a SRAP header of the first E2E PC5-RRC message includes a local identity of the target terminal; and a SRAP header of a second E2E PC5-RRC message sent by the relay terminal to the target terminal includes a local identity of the source terminal; or
a SRAP header of the first E2E PC5-RRC message includes a local identity of the target terminal and a local identity of the source terminal; and a SRAP header of a second E2E PC5-RRC message sent by the relay terminal to the target terminal includes the local identity of the source terminal and the local identity of the target terminal.

In this implementation, because the SRAP headers of the first E2E PC5-RRC message and the second E2E PC5-RRC message use local identities, overheads of the E2E PC5-RRC messages can be reduced.

In some implementations, a MAC header of the first E2E PC5-RRC message may include a layer-2 identity of the source terminal and a layer-2 identity of the relay terminal, and a MAC header of the second E2E PC5-RRC message may include the layer-2 identity of the relay terminal and a layer-2 identity of the target terminal.

In an embodiment, as shown in 15, 16, and 17, after the E2E PC5-S link establishment procedure is completed, the local ID allocation procedure is completed, so that end-to-end security is ensured for local ID allocation. As shown in FIG. 9, specifically the following steps may be included:

When the source UE receives the last E2E PC5-S message (such as DCA) from the target UE, the source UE performs one of the following:
the procedure for allocating the local ID of the target UE (such as step 1b shown in FIG. 5, FIG. 6, and FIG. 7);
instructing the relay UE to trigger the procedure for allocating the local ID of the source UE (such as step 0a shown in FIG. 5, FIG. 6, and FIG. 7); and
instructing the relay UE to trigger the procedure for allocating the local IDs of the source UE and the target UE (such as step 1a and/or step 1b shown in FIG. 8).

If it is determined that at least one of the following conditions is met, the source UE sends a first E2E PC5 RRC message (such as PC5 RRC Reconfiguration) to the relay UE, or optionally sends U2U relay communication service data, or sends any E2E PC5-S message after the E2E PC5-S link is successfully established, including a link modification request (Link Modification Request), a link identifier update (Link Identifier Update) request, or the like:
allocation of the local ID of the target UE is completed (such as step 2b or 3b shown in FIG. 5, FIG. 6, and FIG. 7, or step 2b shown in FIG. 8); and
allocation of the local ID of the source UE is completed (such as step 2a or 3a shown in FIG. 5, FIG. 6, and FIG. 7, or step 2a shown in FIG. 8).

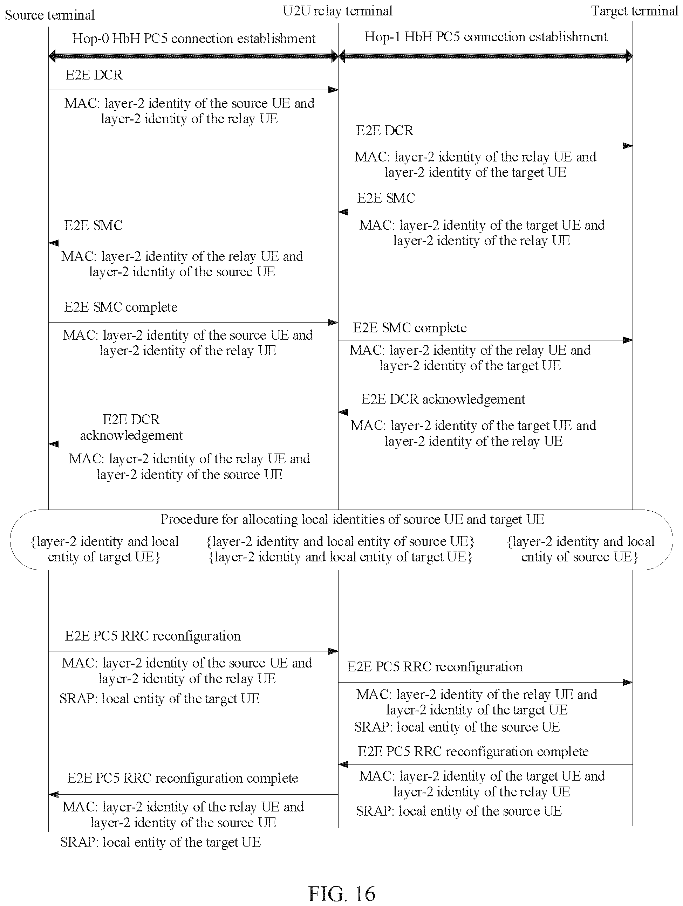

As shown in FIG. 16, a PC5 SARP header format may meet at least one of the following conditions:
the local ID value of the target UE is used between the source UE and the relay UE, as UE ID information carried in the PC5 SARP header format (not applicable to E2E PC5-S signaling in the PC5-S link establishment process, but applicable to other E2E PC5-S signaling after the establishment of the PC5-S link is completed); and
the local ID value of the source UE is used between the relay UE and the target UE, as UE ID information carried in the PC5 SARP header format (not applicable to E2E PC5-S signaling in the PC5-S link establishment process, but applicable to other E2E PC5-S signaling after the establishment of the PC5-S link is completed).

After receiving a PC5 SRAP PDU from the source UE, the relay UE needs to perform additional processing on the PC5 SRAP header format if the relay UE determines that the header format meets the foregoing conditions, that is, the relay UE translates the local ID and the L2 ID in association during forwarding per hop, finally replaces the UE ID information with the local ID value of the source UE, and then forwards the PC5 SRAP PDU to the target UE.

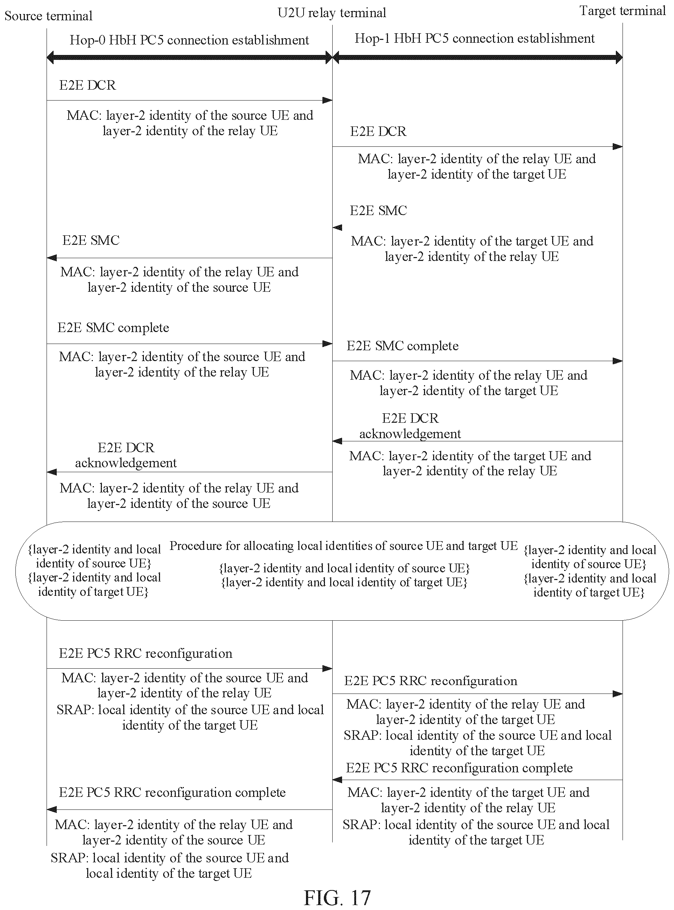

As shown in FIG. 17, a PC5 SARP header format may meet at least one of the following conditions:
the local ID value of the source UE and the local ID value of the target UE are used between the source UE and the relay UE, as UE ID information carried in the PC5 SARP header format (not applicable to E2E PC5-S signaling in the PC5-S link establishment process, but applicable to other E2E PC5-S signaling after the establishment of the PC5-S link is completed); and
the local ID value of the source UE and the local ID value of the target UE are used between the relay UE and the target UE, as UE ID information carried in the PC5 SARP header format (inapplicable to all E2E PC5-S signaling in the PC5-S link establishment process, but applicable to other E2E PC5-S signaling after the establishment of the PC5-S link is completed).

After receiving a PC5 SRAP PDU from the source UE, the relay UE transparently forwards the PC5 SRAP PDU to the target UE if the relay UE determines that the header format meets the foregoing conditions, without performing additional processing on the PC5 SRAP header format.

In addition, in this embodiment of this application, the first terminal may perform U2U relay link communication based on at least one of the local identity of the second terminal and the local identity of the first terminal.

In this embodiment of this application, the first terminal sends the first message, where the first message is used to configure the local identity of the second terminal, and the local identity is used to uniquely identify the terminal in the U2U relay link, where the U2U relay link includes the source terminal, the target terminal, and the relay terminal, and the second terminal is the source terminal or the target terminal; and the first terminal receives the second message, where the second message is the response message to the first message. In this way, the local identity can be configured for the second terminal. The local identity uniquely identifies the terminal in the U2U relay link. Compared with a global L2 ID, the local identity has fewer bits. Therefore, transmission overheads of the terminal can be reduced.

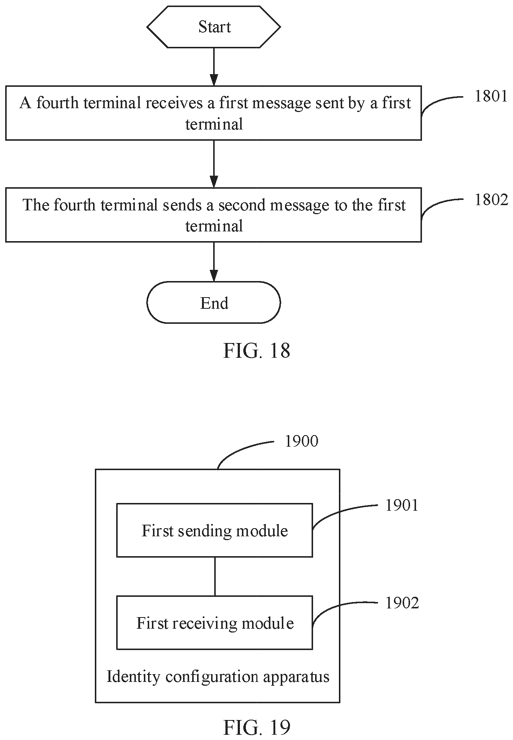

FIG. 18 is a flowchart of another identity configuration method according to an embodiment of this application. As shown in FIG. 18, the method includes the following steps.

Step 1801: A fourth terminal receives a first message sent by a first terminal, where the first message is used to configure a local identity of a second terminal, and the local identity is used to uniquely identify the terminal in a terminal-to-terminal U2U relay link, where the U2U relay link includes a source terminal, a target terminal, and a relay terminal, and the second terminal is the source terminal or the target terminal; and the fourth terminal and the second terminal are the same terminal, or the fourth terminal is the relay terminal.

Step 1802: The fourth terminal sends a second message to the first terminal, where the second message is a response message to the first message.

Optionally, the first message includes at least one of the following:
a layer-2 identity of the second terminal; and
the local identity of the second terminal.

Optionally, before the fourth terminal receives the first message sent by the first terminal, the method further includes:
in a case that the fourth terminal is the relay terminal, the fourth terminal sends a third message to the first terminal, where the third message includes at least one of the following:
a layer-2 identity of the second terminal;
the local identity already allocated;
the local identity not allocated; and
the local identity recommended for allocation.

Optionally, the first terminal is the source terminal, and the second terminal is the target terminal; or
the first terminal is the target terminal, and the second terminal is the source terminal.

Optionally, the second message or a third message includes a local identity of the first terminal, and the third message is a message sent by the relay terminal and received by the first terminal; or
the method further includes:
the fourth terminal sends a fourth message to the first terminal, where the fourth message includes a local identity of the first terminal.

Optionally, the first terminal is the relay terminal.

Optionally, the first message is used to configure the local identity of the second terminal, or the first message is used to configure local identities of the second terminal and a third terminal, where
in a case that the second terminal is the source terminal, the third terminal is the target terminal, or in a case that the second terminal is the target terminal, the third terminal is the source terminal.

Optionally, the first message includes at least one of the following:
a layer-2 identity of the second terminal;
the local identity of the second terminal; and
the local identity of the third terminal.

Optionally, the second message is used to indicate that the local identity configuration for the second terminal succeeds or fails.

Optionally, in a case that the second message indicates that the local identity configuration for the second terminal fails, the method further includes one of the following:
performing an identity reallocation operation;
triggering U2U relay reselection; and
triggering hop-by-hop HbH PC5 radio resource control RRC connection release.

Optionally, the first message is an HbH PC5 RRC message, and the second message is an HbH PC5 RRC message.

Optionally, in a case that the fourth terminal is the source terminal, before the fourth terminal receives the first message sent by the first terminal, the fourth terminal has a first end-to-end E2E PC5-S message to be sent, where the first E2E PC5-S message is used to establish an E2E PC5-S link with the target terminal; or
before the fourth terminal receives the first message sent by the first terminal, the method further includes:
in a case that the fourth terminal is the relay terminal, the fourth terminal receives a first notification message sent by the source terminal, where the first notification message is used to trigger allocation of a local identity to at least one of the source terminal and the target terminal.

Optionally, the method further includes at least one of the following:
in a case that the fourth terminal is the source terminal and that local identity configuration for at least one of the source terminal and the target terminal is completed, the fourth terminal sends the first E2E PC5-S message to the relay terminal; and
in a case that the fourth terminal is the relay terminal and that local identity configuration for at least one of the source terminal and the target terminal is completed, the fourth terminal receives the first E2E PC5-S message sent by the source terminal.

Optionally, a sidelink relay adaptation protocol SRAP header of the first E2E PC5-S message includes a local identity of the target terminal; and a SRAP header of a second E2E PC5-S message sent by the relay terminal to the target terminal includes a local identity of the source terminal; or
a SRAP header of the first E2E PC5-S message includes a local identity of the target terminal and a local identity of the source terminal; and a SRAP header of a second E2E PC5-S message sent by the relay terminal to the target terminal includes the local identity of the source terminal and the local identity of the target terminal.

Optionally, before the fourth terminal receives the first message sent by the first terminal, the method further includes at least one of the following:
in a case that the fourth terminal is the source terminal, the fourth terminal sends a third E2E PC5-S message to the relay terminal, where the third E2E PC5-S message is used to establish an E2E PC5-S link with the target terminal; and
in a case that the fourth terminal is the relay terminal, the fourth terminal receives a third E2E PC5-S message sent by the source terminal, where the third E2E PC5-S message is used to request the source terminal to establish an E2E PC5-S link with the target terminal.

Optionally, the method further includes:
in a case that the fourth terminal is the relay terminal and that local identity configuration for at least one of the source terminal and the target terminal is completed, the fourth terminal sends a fourth E2E PC5-S message to the target terminal.

Optionally, a SRAP header of the third E2E PC5-S message includes a local identity of the target terminal, and a SRAP header of the fourth E2E PC5-S message includes a local identity of the source terminal; or
a SRAP header of the third E2E PC5-S message includes a local identity of the target terminal and a local identity of the source terminal; and a SRAP header of the fourth E2E PC5-S message includes the local identity of the source terminal and the local identity of the target terminal.

Optionally, before the fourth terminal receives the first message sent by the first terminal, the method further includes at least one of the following:
in a case that the fourth terminal is the source terminal, the fourth terminal receives a fifth E2E PC5-S message sent by the target terminal, where the fifth E2E PC5-S message is used to indicate that E2E PC5-S link establishment between the source terminal and the target terminal is completed; and
in a case that the fourth terminal is the relay terminal, the fourth terminal receives a second notification message sent by the source terminal, where the second notification message is used to trigger allocation of a local identity to at least one of the source terminal and the target terminal.

Optionally, the method further includes at least one of the following:
in a case that the fourth terminal is the source terminal and that local identity configuration for at least one of the source terminal and the target terminal is completed, the fourth terminal sends a first E2E PC5-RRC message to the relay terminal; and
in a case that the fourth terminal is the relay terminal and that local identity configuration for at least one of the source terminal and the target terminal is completed, the fourth terminal receives the first E2E PC5-RRC message sent by the source terminal.

Optionally, a SRAP header of the first E2E PC5-RRC message includes a local identity of the target terminal; and a SRAP header of a second E2E PC5-RRC message sent by the relay terminal to the target terminal includes a local identity of the source terminal; or
a SRAP header of the first E2E PC5-RRC message includes a local identity of the target terminal and a local identity of the source terminal; and a SRAP header of a second E2E PC5-RRC message sent by the relay terminal to the target terminal includes the local identity of the source terminal and the local identity of the target terminal.

It should be noted that this embodiment is used as an implementation of the fourth terminal corresponding to the embodiment shown in FIG. 2. For a specific implementation of this embodiment, refer to the related description of the embodiment shown in FIG. 2. To avoid repetition, details are not described in this embodiment again.

FIG. 19 is a structural diagram of an identity configuration apparatus according to an embodiment of this application. As shown in FIG. 19, the identity configuration apparatus 1900 includes:
a first sending module 1901, configured to send a first message, where the first message is used to configure a local identity of a second terminal, and the local identity is used to uniquely identify the terminal in a terminal-to-terminal U2U relay link, where the U2U relay link includes a source terminal, a target terminal, and a relay terminal, and the second terminal is the source terminal or the target terminal; and
a first receiving module 1902, configured to receive a second message, where the second message is a response message to the first message.

The identity configuration apparatus corresponds to the first terminal, or it may be understood that the first terminal includes the identity configuration apparatus.

Optionally, the first message includes at least one of the following:
a layer-2 identity of the second terminal; and
the local identity of the second terminal.

Optionally, the apparatus further includes:
a second receiving module, configured to receive a third message sent by the relay terminal, where the third message includes at least one of the following:
a layer-2 identity of the second terminal;
the local identity already allocated;
the local identity not allocated; and
the local identity recommended for allocation.

Optionally, the first terminal is the source terminal, the second terminal is the target terminal, the first message is a first message sent by the first terminal to the relay terminal, and the second message is a second message sent by the relay terminal and received by the first terminal; or
the first terminal is the target terminal, the second terminal is the source terminal, the first message is a first message sent by the first terminal to the relay terminal, and the second message is a second message sent by the relay terminal and received by the first terminal.

Optionally, the second message or a third message includes a local identity of the first terminal, and the third message is a message sent by the relay terminal and received by the first terminal; or
the apparatus further includes:
a third receiving module, configured to receive a fourth message sent by the relay terminal, where the fourth message includes a local identity of the first terminal.

Optionally, the first terminal is the relay terminal, the first message is a message sent by the first terminal to the second terminal, and the second message is a message sent by the second terminal and received by the first terminal.

Optionally, the apparatus further includes:
a second sending module, configured to send a fifth message to a third terminal, where the fifth message is used to configure a local identity of the third terminal, and in a case that the second terminal is the source terminal, the third terminal is the target terminal, or in a case that the second terminal is the target terminal, the third terminal is the source terminal; and
a fourth receiving module, configured to receive a sixth message sent by the third terminal, where the sixth message is a reply message to the fifth message.

Optionally, the first message is used to configure the local identity of the second terminal, or the first message is used to configure the local identities of the second terminal and the third terminal;
and/or
the fifth message is used to configure the local identity of the third terminal, or the fifth message is used to configure the local identities of the third terminal and the second terminal.

Optionally, the first message includes at least one of the following:
a layer-2 identity of the second terminal;
the local identity of the second terminal; and
the local identity of the third terminal;
   and/or
the fifth message includes at least one of the following:
   a layer-2 identity of the third terminal;
   the local identity of the third terminal; and
   the local identity of the second terminal.

Optionally, the second message is used to indicate that the local identity configuration for the second terminal succeeds or fails.

Optionally, the apparatus further includes one of the following:
an execution module, configured to perform an identity reallocation operation in a case that the second message indicates that the local identity configuration for the second terminal fails;
a first triggering module, configured to trigger U2U relay reselection in a case that the second message indicates that the local identity configuration for the second terminal fails; and
a second triggering module, configured to trigger hop-by-hop HbH PC5 radio resource control RRC connection release in a case that the second message indicates that the local identity configuration for the second terminal fails.

Optionally, the first message is an HbH PC5 RRC message, and the second message is an HbH PC5 RRC message.

Optionally, in a case that the first terminal is the source terminal, before the first terminal sends the first message, the first terminal has a first end-to-end E2E PC5-S message to be sent, where the first E2E PC5-S message is used to establish an E2E PC5-S link with the target terminal; or
the apparatus further includes:
a fifth receiving module, configured to receive a first notification message sent by the source terminal in a case that the first terminal is the relay terminal, where the first notification message is used to trigger allocation of a local identity to at least one of the source terminal and the target terminal.

Optionally, the apparatus further includes at least one of the following:
a third sending module, configured to send the first E2E PC5-S message to the relay terminal in a case that the first terminal is the source terminal and that local identity configuration for at least one of the source terminal and the target terminal is completed; and
a sixth receiving module, configured to receive the first E2E PC5-S message sent by the source terminal in a case that the first terminal is the relay terminal and that local identity configuration for at least one of the source terminal and the target terminal is completed.

Optionally, a sidelink relay adaptation protocol SRAP header of the first E2E PC5-S message includes a local identity of the target terminal; and a SRAP header of a second E2E PC5-S message sent by the relay terminal to the target terminal includes a local identity of the source terminal; or
a SRAP header of the first E2E PC5-S message includes a local identity of the target terminal and a local identity of the source terminal; and a SRAP header of a second E2E PC5-S message sent by the relay terminal to the target terminal includes the local identity of the source terminal and the local identity of the target terminal.

Optionally, the method further includes at least one of the following:
a fourth sending module, configured to send a third E2E PC5-S message to the relay terminal in a case that the first terminal is the source terminal, where the third E2E PC5-S message is used to establish an E2E PC5-S link with the target terminal; and
a fifth sending module, configured to receive a third E2E PC5-S message sent by the source terminal in a case that the first terminal is the relay terminal, where the third E2E PC5-S message is used to request the source terminal to establish an E2E PC5-S link with the target terminal.

Optionally, the apparatus further includes:
a sixth sending module, configured to send a fourth E2E PC5-S message to the target terminal in a case that the first terminal is the relay terminal and that local identity configuration for at least one of the source terminal and the target terminal is completed.

Optionally, a SRAP header of the third E2E PC5-S message includes a local identity of the target terminal, and a SRAP header of the fourth E2E PC5-S message includes a local identity of the source terminal; or
a SRAP header of the third E2E PC5-S message includes a local identity of the target terminal and a local identity of the source terminal; and a SRAP header of the fourth E2E PC5-S message includes the local identity of the source terminal and the local identity of the target terminal.

Optionally, the apparatus further includes at least one of the following:
a seventh receiving module, configured to receive a fifth E2E PC5-S message sent by the target terminal in a case that the first terminal is the source terminal, where the fifth E2E PC5-S message is used to indicate that E2E PC5-S link establishment between the source terminal and the target terminal is completed; and
an eighth receiving module, configured to receive a second notification message sent by the source terminal in a case that the first terminal is the relay terminal, where the second notification message is used to trigger allocation of a local identity to at least one of the source terminal and the target terminal.

Optionally, the method further includes at least one of the following:
a seventh sending module, configured to send a first E2E PC5-RRC message to the relay terminal in a case that the first terminal is the source terminal and that local identity configuration for at least one of the source terminal and the target terminal is completed; and
a tenth receiving module, configured to receive the first E2E PC5-RRC message sent by the source terminal in a case that the first terminal is the relay terminal and that local identity configuration for at least one of the source terminal and the target terminal is completed.

Optionally, a SRAP header of the first E2E PC5-RRC message includes a local identity of the target terminal; and a SRAP header of a second E2E PC5-RRC message sent by the relay terminal to the target terminal includes a local identity of the source terminal; or
a SRAP header of the first E2E PC5-RRC message includes a local identity of the target terminal and a local identity of the source terminal; and a SRAP header of a second E2E PC5-RRC message sent by the relay terminal to the target terminal includes the local identity of the source terminal and the local identity of the target terminal.

The identity configuration apparatus can reduce transmission overheads.

The identity configuration apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the illustrated type of the terminal in the embodiment of this application. The other devices may be a server, a network attached storage (Network Attached Storage, NAS), and the like. This is not specifically limited in this embodiment of this application.

The identity configuration apparatus provided in this embodiment of this application can implement each process implemented in the method embodiment in FIG. 2, with the same technical effect achieved. To avoid repetition, details are not described herein again.

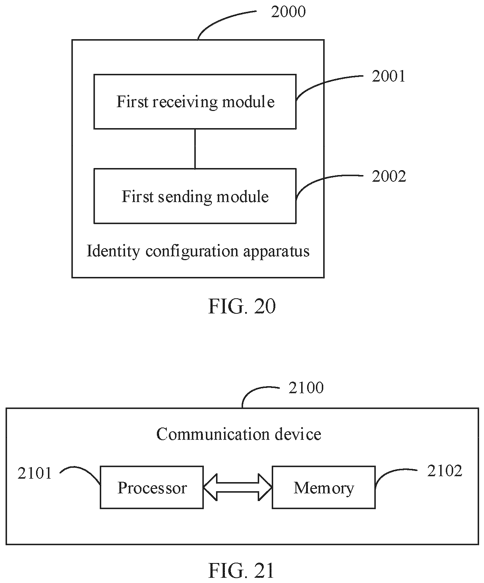

FIG. 20 is a structural diagram of an identity configuration apparatus according to an embodiment of this application. As shown in FIG. 20, the identity configuration apparatus 2000 includes:
a first receiving module 2001, configured to receive a first message sent by a first terminal, where the first message is used to configure a local identity of a second terminal, and the local identity is used to uniquely identify the terminal in a terminal-to-terminal U2U relay link, where the U2U relay link includes a source terminal, a target terminal, and a relay terminal, and the second terminal is the source terminal or the target terminal; and
a first sending module 2002, configured to send a second message to the first terminal, where the second message is a response message to the first message.

The identity configuration apparatus corresponds to the fourth terminal, or it may be understood that the fourth terminal includes the identity configuration apparatus. The fourth terminal and the second terminal are the same terminal, or the fourth terminal is the relay terminal.

Optionally, the first message includes at least one of the following:
a layer-2 identity of the second terminal; and
the local identity of the second terminal.

Optionally, the apparatus further includes:
a second sending module, configured to send a third message to the first terminal in a case that the fourth terminal is the relay terminal, where the third message includes at least one of the following:
a layer-2 identity of the second terminal;
the local identity already allocated;
the local identity not allocated; and
the local identity recommended for allocation.

Optionally, the first terminal is the source terminal, and the second terminal is the target terminal; or
the first terminal is the target terminal, and the second terminal is the source terminal.

Optionally, the second message or a third message includes a local identity of the first terminal, and the third message is a message sent by the relay terminal and received by the first terminal; or
the apparatus further includes: a third sending module, configured to send a fourth message to the first terminal, where the fourth message includes a local identity of the first terminal.

Optionally, the first terminal is the relay terminal.

Optionally, the first message is used to configure the local identity of the second terminal, or the first message is used to configure local identities of the second terminal and a third terminal, where
in a case that the second terminal is the source terminal, the third terminal is the target terminal, or in a case that the second terminal is the target terminal, the third terminal is the source terminal.

Optionally, the first message includes at least one of the following:
a layer-2 identity of the second terminal;
the local identity of the second terminal; and
the local identity of the third terminal.

Optionally, the second message is used to indicate that the local identity configuration for the second terminal succeeds or fails.

Optionally, the apparatus further includes one of the following:
an execution module, configured to perform an identity reallocation operation in a case that the second message indicates that the local identity configuration for the second terminal fails;
a first triggering module, configured to trigger U2U relay reselection in a case that the second message indicates that the local identity configuration for the second terminal fails; and
a first triggering module, configured to trigger hop-by-hop HbH PC5 radio resource control RRC connection release in a case that the second message indicates that the local identity configuration for the second terminal fails.

Optionally, the first message is an HbH PC5 RRC message, and the second message is an HbH PC5 RRC message.

Optionally, in a case that the fourth terminal is the source terminal, before the fourth terminal receives the first message sent by the first terminal, the fourth terminal has a first end-to-end E2E PC5-S message to be sent, where the first E2E PC5-S message is used to establish an E2E PC5-S link with the target terminal; or
the apparatus further includes:
a second receiving module, configured to receive a first notification message sent by the source terminal in a case that the fourth terminal is the relay terminal, where the first notification message is used to trigger allocation of a local identity to at least one of the source terminal and the target terminal.

Optionally, the apparatus further includes at least one of the following:
a fourth sending module, configured to send the first E2E PC5-S message to the relay terminal in a case that the fourth terminal is the source terminal and that local identity configuration for at least one of the source terminal and the target terminal is completed; and
a third receiving module, configured to receive the first E2E PC5-S message sent by the source terminal in a case that the fourth terminal is the relay terminal and that local identity configuration for at least one of the source terminal and the target terminal is completed.

Optionally, a sidelink relay adaptation protocol SRAP header of the first E2E PC5-S message includes a local identity of the target terminal; and a SRAP header of a second E2E PC5-S message sent by the relay terminal to the target terminal includes a local identity of the source terminal; or
a SRAP header of the first E2E PC5-S message includes a local identity of the target terminal and a local identity of the source terminal; and a SRAP header of a second E2E PC5-S message sent by the relay terminal to the target terminal includes the local identity of the source terminal and the local identity of the target terminal.

Optionally, the apparatus further includes at least one of the following:
a fifth sending module, configured to send a third E2E PC5-S message to the relay terminal in a case that the fourth terminal is the source terminal, where the third E2E PC5-S message is used to establish an E2E PC5-S link with the target terminal; and
a fourth receiving module, configured to receive a third E2E PC5-S message sent by the source terminal in a case that the fourth terminal is the relay terminal, where the third E2E PC5-S message is used to request the source terminal to establish an E2E PC5-S link with the target terminal.

Optionally, the apparatus further includes:
a sixth sending module, configured to send a fourth E2E PC5-S message to the target terminal in a case that the fourth terminal is the relay terminal and that local identity configuration for at least one of the source terminal and the target terminal is completed.

Optionally, a SRAP header of the third E2E PC5-S message includes a local identity of the target terminal, and a SRAP header of the fourth E2E PC5-S message includes a local identity of the source terminal; or
a SRAP header of the third E2E PC5-S message includes a local identity of the target terminal and a local identity of the source terminal; and a SRAP header of the fourth E2E PC5-S message includes the local identity of the source terminal and the local identity of the target terminal.

Optionally, the apparatus further includes at least one of the following:
a fifth receiving module, configured to receive a fifth E2E PC5-S message sent by the target terminal in a case that the fourth terminal is the source terminal, where the fifth E2E PC5-S message is used to indicate that E2E PC5-S link establishment between the source terminal and the target terminal is completed; and
a sixth receiving module, configured to receive a second notification message sent by the source terminal in a case that the fourth terminal is the relay terminal, where the second notification message is used to trigger allocation of a local identity to at least one of the source terminal and the target terminal.

Optionally, the apparatus further includes at least one of the following:
a seventh sending module, configured to send a first E2E PC5-RRC message to the relay terminal in a case that the fourth terminal is the source terminal and that local identity configuration for at least one of the source terminal and the target terminal is completed; and
a seventh receiving module, configured to receive the first E2E PC5-RRC message sent by the source terminal in a case that the fourth terminal is the relay terminal and that local identity configuration for at least one of the source terminal and the target terminal is completed.

Optionally, a SRAP header of the first E2E PC5-RRC message includes a local identity of the target terminal; and a SRAP header of a second E2E PC5-RRC message sent by the relay terminal to the target terminal includes a local identity of the source terminal; or
a SRAP header of the first E2E PC5-RRC message includes a local identity of the target terminal and a local identity of the source terminal; and a SRAP header of a second E2E PC5-RRC message sent by the relay terminal to the target terminal includes the local identity of the source terminal and the local identity of the target terminal.

The identity configuration apparatus can reduce transmission overheads.

The identity configuration apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the illustrated type of the terminal in the embodiment of this application. The other devices may be a server, a network attached storage (Network Attached Storage, NAS), and the like. This is not specifically limited in this embodiment of this application.

The identity configuration apparatus provided in this embodiment of this application can implement each process implemented in the method embodiment in FIG. 2, with the same technical effect achieved. To avoid repetition, details are not described herein again.

Optionally, as shown in FIG. 21, an embodiment of this application further provides a communication device 2100, including a processor 2101 and a memory 2102. The memory 2102 stores a program or instructions capable of running on the processor 2101. For example, when the communication device 2100 is a terminal, and the program or instructions are executed by the processor 2101, the steps of the foregoing embodiment of the identity configuration method on the first terminal side or the fourth terminal side are implemented, with the same technical effect achieved. To avoid repetition, details are not described herein again.

An embodiment of this application further provides a terminal, including a processor and a communication interface. The communication interface is configured to: send a first message, where the first message is used to configure a local identity of a second terminal, and the local identity is used to uniquely identify the terminal in a U2U relay link, where the U2U relay link includes a source terminal, a target terminal, and a relay terminal, and the second terminal is the source terminal or the target terminal; and receive a second message, where the second message is a response message to the first message. The terminal embodiment corresponds to the foregoing method embodiment on the first terminal side, and each implementation process and implementation of the foregoing method embodiment can be applied to the terminal embodiment, with the same technical effect achieved.

An embodiment of this application further provides a terminal, including a processor and a communication interface. The communication interface is configured to: receive a first message sent by a first terminal, where the first message is used to configure a local identity of a second terminal, and the local identity is used to uniquely identify the terminal in a U2U relay link, where the U2U relay link includes a source terminal, a target terminal, and a relay terminal, and the second terminal is the source terminal or the target terminal; and send a second message to the first terminal, where the second message is a response message to the first message. The terminal embodiment corresponds to the foregoing method embodiment on the fourth terminal side, and each implementation process and implementation of the foregoing method embodiment can be applied to the terminal embodiment, with the same technical effect achieved.

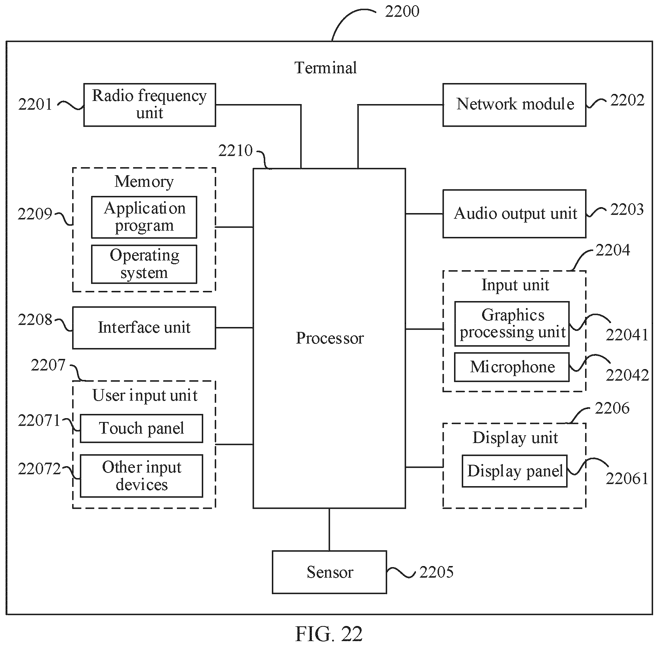

Specifically, FIG. 22 is a schematic diagram of a hardware structure of a terminal for implementing an embodiment of this application.

The terminal 2200 includes but is not limited to at least some components such as a radio frequency unit 2201, a network module 2202, an audio output unit 2203, an input unit 2204, a sensor 2205, a display unit 2206, a user input unit 2207, an interface unit 2208, a memory 2209, and a processor 2210.

A person skilled in the art may understand that the terminal 2200 may further include a power supply (for example, a battery) supplying power to all components. The power supply may be logically connected to the processor 2210 through a power management system. In this way, functions such as charge management, discharge management, and power consumption management are implemented by using the power management system. The terminal structure shown in FIG. 22 does not constitute a limitation on the terminal. The terminal may include more or fewer components than those shown in the figure, or some components are combined, or component arrangements are different. Details are not described herein again.

It should be understood that, in this embodiment of this application, the input unit 2204 may include a graphics processing unit (Graphics Processing Unit, GPU) 22041 and a microphone 22042. The graphics processing unit 22041 processes image data of a still picture or video obtained by an image capture apparatus (such as a camera) in a video capture mode or an image capture mode. The display unit 2206 may include a display panel 22061, and the display panel 22061 may be configured in a form of a liquid crystal display, an organic light-emitting diode, or the like. The user input unit 2207 includes at least one of a touch panel 22071 and other input devices 22072. The touch panel 22071 is also referred to as a touchscreen. The touch panel 22071 may include two parts: a touch detection apparatus and a touch controller. The other input devices 22072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 2201 may transmit the downlink data to the processor 2210 for processing. In addition, the radio frequency unit 2201 may send uplink data to the network-side device. Usually, the radio frequency unit 2201 includes but is not limited to an antenna, an amplifier, a transceiver, a coupler, a low noise amplifier, a duplexer, and the like.

The memory 2209 may be configured to store software programs or instructions and various data. The memory 2209 may primarily include a first storage area for storing programs or instructions and a second storage area for storing data. The first storage area may store an operating system, an application program or instructions required by at least one function (such as an audio play function and an image play function), and the like. In addition, the memory 2209 may include a volatile memory or a non-volatile memory, or the memory 2209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 2209 in this embodiment of this application includes but is not limited to these and any other suitable types of memories.

The processor 2210 may include one or more processing units. Optionally, the processor 2210 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 2210.

In an embodiment in which the terminal is a first terminal:
the radio frequency unit 2201 is configured to: send a first message, where the first message is used to configure a local identity of a second terminal, and the local identity is used to uniquely identify the terminal in a terminal-to-terminal U2U relay link, where the U2U relay link includes a source terminal, a target terminal, and a relay terminal, and the second terminal is the source terminal or the target terminal; and receive a second message, where the second message is a response message to the first message.

Optionally, the first message includes at least one of the following:
a layer-2 identity of the second terminal; and
the local identity of the second terminal.

Optionally, before sending the first message, the radio frequency unit 2201 is further configured to:
receive a third message sent by the relay terminal, where the third message includes at least one of the following:
a layer-2 identity of the second terminal;
the local identity already allocated;
the local identity not allocated; and
the local identity recommended for allocation.

Optionally, the first terminal is the source terminal, the second terminal is the target terminal, the first message is a first message sent by the first terminal to the relay terminal, and the second message is a second message sent by the relay terminal and received by the first terminal; or
the first terminal is the target terminal, the second terminal is the source terminal, the first message is a first message sent by the first terminal to the relay terminal, and the second message is a second message sent by the relay terminal and received by the first terminal.

Optionally, the second message or a third message includes a local identity of the first terminal, and the third message is a message sent by the relay terminal and received by the first terminal; or
the radio frequency unit 2201 is further configured to:
receive a fourth message sent by the relay terminal, where the fourth message includes a local identity of the first terminal.

Optionally, the first terminal is the relay terminal, the first message is a message sent by the first terminal to the second terminal, and the second message is a message sent by the second terminal and received by the first terminal.

Optionally, the radio frequency unit 2201 is further configured to:
send a fifth message to a third terminal, where the fifth message is used to configure a local identity of the third terminal, and in a case that the second terminal is the source terminal, the third terminal is the target terminal, or in a case that the second terminal is the target terminal, the third terminal is the source terminal; and
receive a sixth message sent by the third terminal, where the sixth message is a reply message to the fifth message.

Optionally, the first message is used to configure the local identity of the second terminal, or the first message is used to configure the local identities of the second terminal and the third terminal;
and/or
the fifth message is used to configure the local identity of the third terminal, or the fifth message is used to configure the local identities of the third terminal and the second terminal.

Optionally, the first message includes at least one of the following:
a layer-2 identity of the second terminal;
the local identity of the second terminal; and
the local identity of the third terminal;
   and/or
the fifth message includes at least one of the following:
   a layer-2 identity of the third terminal;
   the local identity of the third terminal; and
   the local identity of the second terminal.

Optionally, the second message is used to indicate that the local identity configuration for the second terminal succeeds or fails.

Optionally, in a case that the second message indicates that the local identity configuration for the second terminal fails, the radio frequency unit 2201 is further configured to perform at least one of the following:
performing an identity reallocation operation;
triggering U2U relay reselection; and
triggering hop-by-hop HbH PC5 radio resource control RRC connection release.

Optionally, the first message is an HbH PC5 RRC message, and the second message is an HbH PC5 RRC message.

Optionally, in a case that the first terminal is the source terminal, before the first terminal sends the first message, the first terminal has a first end-to-end E2E PC5-S message to be sent, where the first E2E PC5-S message is used to establish an E2E PC5-S link with the target terminal; or
before the first terminal sends the first message, the radio frequency unit 2201 is further configured to perform at least one of the following:
in a case that the first terminal is the relay terminal, receiving a first notification message sent by the source terminal, where the first notification message is used to trigger allocation of a local identity to at least one of the source terminal and the target terminal.

Optionally, the radio frequency unit 2201 is further configured to perform at least one of the following:
in a case that the first terminal is the source terminal and that local identity configuration for at least one of the source terminal and the target terminal is completed, sending the first E2E PC5-S message to the relay terminal; and
in a case that the first terminal is the relay terminal and that local identity configuration for at least one of the source terminal and the target terminal is completed, receiving the first E2E PC5-S message sent by the source terminal.

Optionally, a sidelink relay adaptation protocol SRAP header of the first E2E PC5-S message includes a local identity of the target terminal; and a SRAP header of a second E2E PC5-S message sent by the relay terminal to the target terminal includes a local identity of the source terminal; or
a SRAP header of the first E2E PC5-S message includes a local identity of the target terminal and a local identity of the source terminal; and a SRAP header of a second E2E PC5-S message sent by the relay terminal to the target terminal includes the local identity of the source terminal and the local identity of the target terminal.

Optionally, before the first terminal sends the first message, the radio frequency unit 2201 is further configured to perform at least one of the following:
in a case that the first terminal is the source terminal, sending a third E2E PC5-S message to the relay terminal, where the third E2E PC5-S message is used to establish an E2E PC5-S link with the target terminal; and
in a case that the first terminal is the relay terminal, receiving a third E2E PC5-S message sent by the source terminal, where the third E2E PC5-S message is used to request the source terminal to establish an E2E PC5-S link with the target terminal.

Optionally, the radio frequency unit 2201 is further configured to perform at least one of the following:
in a case that the first terminal is the relay terminal and that local identity configuration for at least one of the source terminal and the target terminal is completed, sending, by the first terminal, a fourth E2E PC5-S message to the target terminal.

Optionally, a SRAP header of the third E2E PC5-S message includes a local identity of the target terminal, and a SRAP header of the fourth E2E PC5-S message includes a local identity of the source terminal; or
a SRAP header of the third E2E PC5-S message includes a local identity of the target terminal and a local identity of the source terminal; and a SRAP header of the fourth E2E PC5-S message includes the local identity of the source terminal and the local identity of the target terminal.

Optionally, before the first terminal sends the first message, the radio frequency unit 2201 is further configured to perform at least one of the following:
in a case that the first terminal is the source terminal, receiving a fifth E2E PC5-S message sent by the target terminal, where the fifth E2E PC5-S message is used to indicate that E2E PC5-S link establishment between the source terminal and the target terminal is completed; and
in a case that the first terminal is the relay terminal, receiving, by the first terminal, a second notification message sent by the source terminal, where the second notification message is used to trigger allocation of a local identity to at least one of the source terminal and the target terminal.

Optionally, the radio frequency unit 2201 is further configured to perform at least one of the following:
in a case that the first terminal is the source terminal and that local identity configuration for at least one of the source terminal and the target terminal is completed, sending a first E2E PC5-RRC message to the relay terminal; and
in a case that the first terminal is the relay terminal and that local identity configuration for at least one of the source terminal and the target terminal is completed, receiving the first E2E PC5-RRC message sent by the source terminal.

Optionally, a SRAP header of the first E2E PC5-RRC message includes a local identity of the target terminal; and a SRAP header of a second E2E PC5-RRC message sent by the relay terminal to the target terminal includes a local identity of the source terminal; or
a SRAP header of the first E2E PC5-RRC message includes a local identity of the target terminal and a local identity of the source terminal; and a SRAP header of a second E2E PC5-RRC message sent by the relay terminal to the target terminal includes the local identity of the source terminal and the local identity of the target terminal.

In an embodiment in which the terminal is a fourth terminal:
the radio frequency unit 2201 is configured to: receive a first message sent by a first terminal, where the first message is used to configure a local identity of a second terminal, and the local identity is used to uniquely identify the terminal in a terminal-to-terminal U2U relay link, where the U2U relay link includes a source terminal, a target terminal, and a relay terminal, and the second terminal is the source terminal or the target terminal; and the fourth terminal and the second terminal are the same terminal, or the fourth terminal is the relay terminal; and send a second message to the first terminal, where the second message is a response message to the first message.

Optionally, the first message includes at least one of the following:
a layer-2 identity of the second terminal; and
the local identity of the second terminal.

Optionally, before the fourth terminal receives the first message sent by the first terminal, the radio frequency unit 2201 is further configured to:
in a case that the fourth terminal is the relay terminal, send a third message to the first terminal, where the third message includes at least one of the following:
a layer-2 identity of the second terminal;
the local identity already allocated;
the local identity not allocated; and
the local identity recommended for allocation.

Optionally, the first terminal is the source terminal, and the second terminal is the target terminal; or
the first terminal is the target terminal, and the second terminal is the source terminal.

Optionally, the second message or a third message includes a local identity of the first terminal, and the third message is a message sent by the relay terminal and received by the first terminal; or
the radio frequency unit 2201 is further configured to:
send, by the fourth terminal, a fourth message to the first terminal, where the fourth message includes a local identity of the first terminal.

Optionally, the first terminal is the relay terminal.

Optionally, the first message is used to configure the local identity of the second terminal, or the first message is used to configure local identities of the second terminal and a third terminal, where
in a case that the second terminal is the source terminal, the third terminal is the target terminal, or in a case that the second terminal is the target terminal, the third terminal is the source terminal.

Optionally, the first message includes at least one of the following:
a layer-2 identity of the second terminal;
the local identity of the second terminal; and
the local identity of the third terminal.

Optionally, the second message is used to indicate that the local identity configuration for the second terminal succeeds or fails.

Optionally, in a case that the second message indicates that the local identity configuration for the second terminal fails, the radio frequency unit 2201 is further configured to perform at least one of the following:
performing an identity reallocation operation;
triggering U2U relay reselection; and
triggering hop-by-hop HbH PC5 radio resource control RRC connection release.

Optionally, the first message is an HbH PC5 RRC message, and the second message is an HbH PC5 RRC message.

Optionally, in a case that the fourth terminal is the source terminal, before the fourth terminal receives the first message sent by the first terminal, the fourth terminal has a first end-to-end E2E PC5-S message to be sent, where the first E2E PC5-S message is used to establish an E2E PC5-S link with the target terminal; or
before the fourth terminal receives the first message sent by the first terminal, the radio frequency unit 2201 is further configured to perform at least one of the following:
in a case that the fourth terminal is the relay terminal, receiving a first notification message sent by the source terminal, where the first notification message is used to trigger allocation of a local identity to at least one of the source terminal and the target terminal.

Optionally, the radio frequency unit 2201 is further configured to perform at least one of the following:
in a case that the fourth terminal is the source terminal and that local identity configuration for at least one of the source terminal and the target terminal is completed, sending the first E2E PC5-S message to the relay terminal; and
in a case that the fourth terminal is the relay terminal and that local identity configuration for at least one of the source terminal and the target terminal is completed, receiving the first E2E PC5-S message sent by the source terminal.

Optionally, a sidelink relay adaptation protocol SRAP header of the first E2E PC5-S message includes a local identity of the target terminal; and a SRAP header of a second E2E PC5-S message sent by the relay terminal to the target terminal includes a local identity of the source terminal; or
a SRAP header of the first E2E PC5-S message includes a local identity of the target terminal and a local identity of the source terminal; and a SRAP header of a second E2E PC5-S message sent by the relay terminal to the target terminal includes the local identity of the source terminal and the local identity of the target terminal.

Optionally, before the fourth terminal receives the first message sent by the first terminal, the radio frequency unit 2201 is further configured to perform at least one of the following:
in a case that the fourth terminal is the source terminal, sending a third E2E PC5-S message to the relay terminal, where the third E2E PC5-S message is used to establish an E2E PC5-S link with the target terminal; and
in a case that the fourth terminal is the relay terminal, receiving a third E2E PC5-S message sent by the source terminal, where the third E2E PC5-S message is used to request the source terminal to establish an E2E PC5-S link with the target terminal.

Optionally, the radio frequency unit 2201 is further configured to:
in a case that the fourth terminal is the relay terminal and that local identity configuration for at least one of the source terminal and the target terminal is completed, send a fourth E2E PC5-S message to the target terminal.

Optionally, a SRAP header of the third E2E PC5-S message includes a local identity of the target terminal, and a SRAP header of the fourth E2E PC5-S message includes a local identity of the source terminal; or
a SRAP header of the third E2E PC5-S message includes a local identity of the target terminal and a local identity of the source terminal; and a SRAP header of the fourth E2E PC5-S message includes the local identity of the source terminal and the local identity of the target terminal.

Optionally, before the fourth terminal receives the first message sent by the first terminal, the radio frequency unit 2201 is further configured to perform at least one of the following:
in a case that the fourth terminal is the source terminal, receiving a fifth E2E PC5-S message sent by the target terminal, where the fifth E2E PC5-S message is used to indicate that E2E PC5-S link establishment between the source terminal and the target terminal is completed; and
in a case that the fourth terminal is the relay terminal, receiving a second notification message sent by the source terminal, where the second notification message is used to trigger allocation of a local identity to at least one of the source terminal and the target terminal.

Optionally, the radio frequency unit 2201 is further configured to perform at least one of the following:
in a case that the fourth terminal is the source terminal and that local identity configuration for at least one of the source terminal and the target terminal is completed, sending a first E2E PC5-RRC message to the relay terminal; and
in a case that the fourth terminal is the relay terminal and that local identity configuration for at least one of the source terminal and the target terminal is completed, receiving, by the fourth terminal, the first E2E PC5-RRC message sent by the source terminal.

Optionally, a SRAP header of the first E2E PC5-RRC message includes a local identity of the target terminal; and a SRAP header of a second E2E PC5-RRC message sent by the relay terminal to the target terminal includes a local identity of the source terminal; or
a SRAP header of the first E2E PC5-RRC message includes a local identity of the target terminal and a local identity of the source terminal; and a SRAP header of a second E2E PC5-RRC message sent by the relay terminal to the target terminal includes the local identity of the source terminal and the local identity of the target terminal.

The terminal can reduce transmission overheads of the terminal.

An embodiment of this application further provides a readable storage medium. The readable storage medium stores a program or instructions. When the program or instructions are executed by a processor, the steps of the identity configuration method according to the embodiments of this application are implemented.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the identity configuration method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor of a first terminal to implement each process of the identity configuration method on the first terminal side according to the embodiment of the identity configuration method, or the computer program or program product is executed by at least one processor of a fourth terminal to implement each process of the identity configuration method on the fourth terminal side according to the embodiment of the identity configuration method, with the same technical effect achieved. To avoid repetition, details are not described herein again.

An embodiment of this application further provides a frequency domain resource determining system, including a first terminal and a fourth terminal. The first terminal may be configured to perform the steps of the identity configuration method on the first terminal side according to the embodiments of this application. The fourth terminal may be configured to perform the steps of the identity configuration method on the fourth terminal side according to the embodiments of this application.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

Based on the foregoing descriptions of the implementations, a person skilled in the art may clearly understand that the foregoing embodiment methods can be implemented by using software in combination to a hardware platform, or by using hardware only. Based on such an understanding, the technical solutions of this application may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. An identity configuration method, comprising:
sending, by a first terminal, a first message, wherein the first message is used to configure a local identity of a second terminal, and the local identity is used to uniquely identify the terminal in a terminal-to-terminal U2U relay link, wherein the U2U relay link comprises a source terminal, a target terminal, and a relay terminal, and the second terminal is the source terminal or the target terminal; and
receiving, by the first terminal, a second message, wherein the second message is a response message to the first message.

2. The method according to claim 1, wherein the first message comprises at least one of the following:
a layer-2 identity of the second terminal; and
the local identity of the second terminal.

3. The method according to claim 1, wherein before the sending, by a first terminal, a first message, the method further comprises:
receiving, by the first terminal, a third message sent by the relay terminal, wherein the third message comprises at least one of the following:
a layer-2 identity of the second terminal;
the local identity already allocated;
the local identity not allocated; and
the local identity recommended for allocation.

4. The method according to claim 1, wherein the first terminal is the source terminal, the second terminal is the target terminal, the first message is a first message sent by the first terminal to the relay terminal, and the second message is a second message sent by the relay terminal and received by the first terminal; or
the first terminal is the target terminal, the second terminal is the source terminal, the first message is a first message sent by the first terminal to the relay terminal, and the second message is a second message sent by the relay terminal and received by the first terminal.

5. The method according to claim 4, wherein the second message or a third message comprises a local identity of the first terminal, and the third message is a message sent by the relay terminal and received by the first terminal; or
the method further comprises:
receiving, by the first terminal, a fourth message sent by the relay terminal, wherein the fourth message comprises a local identity of the first terminal.

6. The method according to claim 1, wherein the first terminal is the relay terminal, the first message is a message sent by the first terminal to the second terminal, and the second message is a message sent by the second terminal and received by the first terminal.

7. The method according to claim 6, wherein the method further comprises:
sending, by the first terminal, a fifth message to a third terminal, wherein the fifth message is used to configure a local identity of the third terminal, and in a case that the second terminal is the source terminal, the third terminal is the target terminal, or in a case that the second terminal is the target terminal, the third terminal is the source terminal; and
receiving, by the first terminal, a sixth message sent by the third terminal, wherein the sixth message is a reply message to the fifth message.

8. The method according to claim 7, wherein the first message is used to configure the local identity of the second terminal, or the first message is used to configure the local identities of the second terminal and the third terminal;
and/or
the fifth message is used to configure the local identity of the third terminal, or the fifth message is used to configure the local identities of the third terminal and the second terminal.

9. The method according to claim 8, wherein the first message comprises at least one of the following:
a layer-2 identity of the second terminal;
the local identity of the second terminal; and
the local identity of the third terminal;
and/or
the fifth message comprises at least one of the following:
a layer-2 identity of the third terminal;
the local identity of the third terminal; and
the local identity of the second terminal.

10. The method according to any one of claims 1 to 9, wherein the second message is used to indicate that the local identity configuration for the second terminal succeeds or fails.

11. The method according to claim 10, wherein in a case that the second message indicates that the local identity configuration for the second terminal fails, the method further comprises one of the following:
performing an identity reallocation operation;
triggering U2U relay reselection; and
triggering hop-by-hop HbH PC5 radio resource control RRC connection release.

12. The method according to any one of claims 1 to 9, wherein the first message is an HbH PC5 RRC message, and the second message is an HbH PC5 RRC message.

13. The method according to any one of claims 1 to 9, wherein in a case that the first terminal is the source terminal, before the sending, by a first terminal, a first message, the first terminal has a first end-to-end E2E PC5-S message to be sent, wherein the first E2E PC5-S message is used to establish an E2E PC5-S link with the target terminal; or
before the sending, by a first terminal, a first message, the method further comprises:
in a case that the first terminal is the relay terminal, receiving, by the first terminal, a first notification message sent by the source terminal, wherein the first notification message is used to trigger allocation of a local identity to at least one of the source terminal and the target terminal.

14. The method according to claim 13, wherein the method further comprises at least one of the following:
in a case that the first terminal is the source terminal and that local identity configuration for at least one of the source terminal and the target terminal is completed, sending, by the first terminal, the first E2E PC5-S message to the relay terminal; and
in a case that the first terminal is the relay terminal and that local identity configuration for at least one of the source terminal and the target terminal is completed, receiving, by the first terminal, the first E2E PC5-S message sent by the source terminal.

15. The method according to claim 14, wherein a sidelink relay adaptation protocol SRAP header of the first E2E PC5-S message comprises a local identity of the target terminal; and a SRAP header of a second E2E PC5-S message sent by the relay terminal to the target terminal comprises a local identity of the source terminal; or
a SRAP header of the first E2E PC5-S message comprises a local identity of the target terminal and a local identity of the source terminal; and a SRAP header of a second E2E PC5-S message sent by the relay terminal to the target terminal comprises the local identity of the source terminal and the local identity of the target terminal.

16. The method according to any one of claims 1 to 9, wherein before the sending, by a first terminal, a first message, the method further comprises at least one of the following:
in a case that the first terminal is the source terminal, sending, by the first terminal, a third E2E PC5-S message to the relay terminal, wherein the third E2E PC5-S message is used to establish an E2E PC5-S link with the target terminal; and
in a case that the first terminal is the relay terminal, receiving, by the first terminal, a third E2E PC5-S message sent by the source terminal, wherein the third E2E PC5-S message is used to request the source terminal to establish an E2E PC5-S link with the target terminal.

17. The method according to claim 16, wherein the method further comprises:
in a case that the first terminal is the relay terminal and that local identity configuration for at least one of the source terminal and the target terminal is completed, sending, by the first terminal, a fourth E2E PC5-S message to the target terminal.

18. The method according to claim 17, wherein a SRAP header of the third E2E PC5-S message comprises a local identity of the target terminal, and a SRAP header of the fourth E2E PC5-S message comprises a local identity of the source terminal; or
a SRAP header of the third E2E PC5-S message comprises a local identity of the target terminal and a local identity of the source terminal; and a SRAP header of the fourth E2E PC5-S message comprises the local identity of the source terminal and the local identity of the target terminal.

19. The method according to any one of claims 1 to 9, wherein before the sending, by a first terminal, a first message, the method further comprises at least one of the following:
in a case that the first terminal is the source terminal, receiving, by the first terminal, a fifth E2E PC5-S message sent by the target terminal, wherein the fifth E2E PC5-S message is used to indicate that E2E PC5-S link establishment between the source terminal and the target terminal is completed; and
in a case that the first terminal is the relay terminal, receiving, by the first terminal, a second notification message sent by the source terminal, wherein the second notification message is used to trigger allocation of a local identity to at least one of the source terminal and the target terminal.

20. The method according to claim 19, wherein the method further comprises at least one of the following:
in a case that the first terminal is the source terminal and that local identity configuration for at least one of the source terminal and the target terminal is completed, sending, by the first terminal, a first E2E PC5-RRC message to the relay terminal; and
in a case that the first terminal is the relay terminal and that local identity configuration for at least one of the source terminal and the target terminal is completed, receiving, by the first terminal, the first E2E PC5-RRC message sent by the source terminal.

21. The method according to claim 20, wherein a SRAP header of the first E2E PC5-RRC message comprises a local identity of the target terminal; and a SRAP header of a second E2E PC5-RRC message sent by the relay terminal to the target terminal comprises a local identity of the source terminal; or
a SRAP header of the first E2E PC5-RRC message comprises a local identity of the target terminal and a local identity of the source terminal; and a SRAP header of a second E2E PC5-RRC message sent by the relay terminal to the target terminal comprises the local identity of the source terminal and the local identity of the target terminal.

22. An identity configuration method, comprising:
receiving, by a fourth terminal, a first message sent by a first terminal, wherein the first message is used to configure a local identity of a second terminal, and the local identity is used to uniquely identify the terminal in a terminal-to-terminal U2U relay link, wherein the U2U relay link comprises a source terminal, a target terminal, and a relay terminal, and the second terminal is the source terminal or the target terminal; and the fourth terminal and the second terminal are the same terminal, or the fourth terminal is the relay terminal; and
sending, by the fourth terminal, a second message to the first terminal, wherein the second message is a response message to the first message.

23. The method according to claim 22, wherein the first message comprises at least one of the following:
a layer-2 identity of the second terminal; and
the local identity of the second terminal.

24. The method according to claim 22, wherein before the receiving, by a fourth terminal, a first message sent by a first terminal, the method further comprises:
in a case that the fourth terminal is the relay terminal, sending, by the fourth terminal, a third message to the first terminal, wherein the third message comprises at least one of the following:
a layer-2 identity of the second terminal;
the local identity already allocated;
the local identity not allocated; and
the local identity recommended for allocation.

25. The method according to claim 22, wherein the first terminal is the source terminal, and the second terminal is the target terminal; or
the first terminal is the target terminal, and the second terminal is the source terminal.

26. The method according to claim 25, wherein the second message or a third message comprises a local identity of the first terminal, and the third message is a message sent by the relay terminal and received by the first terminal; or
the method further comprises:
sending, by the fourth terminal, a fourth message to the first terminal, wherein the fourth message comprises a local identity of the first terminal.

27. The method according to claim 22, wherein the first terminal is the relay terminal.

28. The method according to claim 27, wherein the first message is used to configure the local identity of the second terminal, or the first message is used to configure local identities of the second terminal and a third terminal, wherein
in a case that the second terminal is the source terminal, the third terminal is the target terminal, or in a case that the second terminal is the target terminal, the third terminal is the source terminal.

29. The method according to claim 28, wherein the first message comprises at least one of the following:
a layer-2 identity of the second terminal;
the local identity of the second terminal; and
the local identity of the third terminal.

30. The method according to any one of claims 22 to 29, wherein the second message is used to indicate that the local identity configuration for the second terminal succeeds or fails.

31. The method according to claim 30, wherein in a case that the second message indicates that the local identity configuration for the second terminal fails, the method further comprises one of the following:
performing an identity reallocation operation;
triggering U2U relay reselection; and
triggering hop-by-hop HbH PC5 radio resource control RRC connection release.

32. The method according to any one of claims 22 to 29, wherein the first message is an HbH PC5 RRC message, and the second message is an HbH PC5 RRC message.

33. The method according to any one of claims 22 to 29, wherein in a case that the fourth terminal is the source terminal, before the receiving, by a fourth terminal, a first message sent by a first terminal, the fourth terminal has a first end-to-end E2E PC5-S message to be sent, wherein the first E2E PC5-S message is used to establish an E2E PC5-S link with the target terminal; or
before the receiving, by a fourth terminal, a first message sent by a first terminal, the method further comprises:
in a case that the fourth terminal is the relay terminal, receiving, by the fourth terminal, a first notification message sent by the source terminal, wherein the first notification message is used to trigger allocation of a local identity to at least one of the source terminal and the target terminal.

34. The method according to claim 33, wherein the method further comprises at least one of the following:
in a case that the fourth terminal is the source terminal and that local identity configuration for at least one of the source terminal and the target terminal is completed, sending, by the fourth terminal, the first E2E PC5-S message to the relay terminal; and
in a case that the fourth terminal is the relay terminal and that local identity configuration for at least one of the source terminal and the target terminal is completed, receiving, by the fourth terminal, the first E2E PC5-S message sent by the source terminal.

35. The method according to claim 34, wherein a sidelink relay adaptation protocol SRAP header of the first E2E PC5-S message comprises a local identity of the target terminal; and a SRAP header of a second E2E PC5-S message sent by the relay terminal to the target terminal comprises a local identity of the source terminal; or
a SRAP header of the first E2E PC5-S message comprises a local identity of the target terminal and a local identity of the source terminal; and a SRAP header of a second E2E PC5-S message sent by the relay terminal to the target terminal comprises the local identity of the source terminal and the local identity of the target terminal.

36. The method according to any one of claims 22 to 29, wherein before the receiving, by a fourth terminal, a first message sent by a first terminal, the method further comprises at least one of the following:
in a case that the fourth terminal is the source terminal, sending, by the fourth terminal, a third E2E PC5-S message to the relay terminal, wherein the third E2E PC5-S message is used to establish an E2E PC5-S link with the target terminal; and
in a case that the fourth terminal is the relay terminal, receiving, by the fourth terminal, a third E2E PC5-S message sent by the source terminal, wherein the third E2E PC5-S message is used to request the source terminal to establish an E2E PC5-S link with the target terminal.

37. The method according to claim 36, wherein the method further comprises:
in a case that the fourth terminal is the relay terminal and that local identity configuration for at least one of the source terminal and the target terminal is completed, sending, by the fourth terminal, a fourth E2E PC5-S message to the target terminal.

38. The method according to claim 37, wherein a SRAP header of the third E2E PC5-S message comprises a local identity of the target terminal, and a SRAP header of the fourth E2E PC5-S message comprises a local identity of the source terminal; or
a SRAP header of the third E2E PC5-S message comprises a local identity of the target terminal and a local identity of the source terminal; and a SRAP header of the fourth E2E PC5-S message comprises the local identity of the source terminal and the local identity of the target terminal.

39. The method according to any one of claims 22 to 29, wherein before the receiving, by a fourth terminal, a first message sent by a first terminal, the method further comprises at least one of the following:
in a case that the fourth terminal is the source terminal, receiving, by the fourth terminal, a fifth E2E PC5-S message sent by the target terminal, wherein the fifth E2E PC5-S message is used to indicate that E2E PC5-S link establishment between the source terminal and the target terminal is completed; and
in a case that the fourth terminal is the relay terminal, receiving, by the fourth terminal, a second notification message sent by the source terminal, wherein the second notification message is used to trigger allocation of a local identity to at least one of the source terminal and the target terminal.

40. The method according to claim 39, wherein the method further comprises at least one of the following:
in a case that the fourth terminal is the source terminal and that local identity configuration for at least one of the source terminal and the target terminal is completed, sending, by the fourth terminal, a first E2E PC5-RRC message to the relay terminal; and
in a case that the fourth terminal is the relay terminal and that local identity configuration for at least one of the source terminal and the target terminal is completed, receiving, by the fourth terminal, the first E2E PC5-RRC message sent by the source terminal.

41. The method according to claim 40, wherein a SRAP header of the first E2E PC5-RRC message comprises a local identity of the target terminal; and a SRAP header of a second E2E PC5-RRC message sent by the relay terminal to the target terminal comprises a local identity of the source terminal; or
a SRAP header of the first E2E PC5-RRC message comprises a local identity of the target terminal and a local identity of the source terminal; and a SRAP header of a second E2E PC5-RRC message sent by the relay terminal to the target terminal comprises the local identity of the source terminal and the local identity of the target terminal.

42. An identity configuration apparatus, comprising:
a first sending module, configured to send a first message, wherein the first message is used to configure a local identity of a second terminal, and the local identity is used to uniquely identify the terminal in a terminal-to-terminal U2U relay link, wherein the U2U relay link comprises a source terminal, a target terminal, and a relay terminal, and the second terminal is the source terminal or the target terminal; and
a first receiving module, configured to receive a second message, wherein the second message is a response message to the first message.

43. An identity configuration apparatus, comprising:
a first receiving module, configured to receive a first message sent by a first terminal, wherein the first message is used to configure a local identity of a second terminal, and the local identity is used to uniquely identify the terminal in a terminal-to-terminal U2U relay link, wherein the U2U relay link comprises a source terminal, a target terminal, and a relay terminal, and the second terminal is the source terminal or the target terminal; and
a first sending module, configured to send a second message to the first terminal, wherein the second message is a response message to the first message.

44. A terminal, wherein the terminal is a first terminal and comprises a processor and a memory, wherein the memory stores a program or instructions capable of running on the processor, and when the program or instructions are executed by the processor, the steps of the identity configuration method according to any one of claims 1 to 21 are implemented.

45. A terminal, wherein the terminal is a fourth terminal and comprises a processor and a memory, wherein the memory stores a program or instructions capable of running on the processor, and when the program or instructions are executed by the processor, the steps of the identity configuration method according to any one of claims 22 to 41 are implemented.

46. A readable storage medium, wherein the readable storage medium stores a program or instructions, and when the program or instructions are executed by a processor, the steps of the identity configuration method according to any one of claims 1 to 21 are implemented; or when the program or instructions are executed by a processor, the steps of the identity configuration method according to any one of claims 22 to 41 are implemented.
